# EUROPÄISCHE PATENTSCHRIFT

(11) **EP 3 433 126 B1**
(45) Veröffentlichungstag und Bekanntmachung des Hinweises auf die Patenterteilung: **20.01.2021**
(21) Anmeldenummer: 17713894.8
(22) Anmeldetag: 24.03.2017
(51) Int. Cl.: B60L 15/00, B60L 1/00, H02M 7/483, H02M 7/49, B60L 7/14, B60L 58/21, B60L 58/20

(54) **VERFAHREN ZUM BETREIBEN EINES ELEKTRISCHEN NETZES**
METHOD FOR OPERATING AN ELECTRICAL NETWORK
PROCÉDÉ D'EXPLOITATION D'UN RÉSEAU ÉLECTRIQUE

(30) Priorität: 24.03.2016 DE 102016105542
(43) Veröffentlichungstag der Anmeldung: 30.01.2019
(73) Patentinhaber: Dr.Ing. H.C. F. Porsche Aktiengesellschaft, 70435 Stuttgart (DE)
(72) Erfinder: GÖTZ, Stefan, 85659 Forstern (DE); JAENSCH, Malte, 74321 Bietigheim-Bissingen (DE); LAPPE, Dirk, 76228 Karlsruhe/Hohenwettersbach (DE)
(86) Internationale Anmeldenummer: PCT/EP2017/025059
(87) Internationale Veröffentlichungsnummer: WO 2017/162341

(56) Entgegenhaltungen:
- WO-A1-2012/107149
- DE-A1-102012 202 867
- JP-B2- 5 853 094
- US-A1- 2011 198 936
- US-A1- 2013 241 472

## Beschreibung

Die Erfindung betrifft ein Verfahren zum Betreiben eines elektrischen Netzes, einen Multilevelkonverter und ein Energieversorgungssystem.

Ein elektrisches Netz kann mehrere Energiequellen aufweisen, über die mehreren Verbrauchern, die mit dem elektrischen Netz verbunden sind, elektrische Energie bereitstellbar ist. Hierbei ist es weiterhin möglich, dass das elektrische Netz in mehrere Teilnetze unterteilt ist, denen jeweils unterschiedliche Energiequellen sowie Verbraucher zugeordnet sind. Die unterschiedlichen Teilnetze können unterschiedliche Spannungen aufweisen, mit denen die Teilnetze zu betreiben sind, wobei diese unterschiedlichen Spannungen unterschiedliche Amplituden und/oder unterschiedliche maximale Werte aufweisen. Zwei hierbei miteinander verbundene Teilnetze mit unterschiedlichen Spannungen sind über einen Spannungswandler, bspw. einen Gleichspannungswandler oder einen Wechselspannungswandler, miteinander verbunden.

Aus der Druckschrift US 5 093 583 A ist ein elektrisches System für ein Kraftfahrzeug bekannt, das ein Niederspannungsnetz sowie ein Hochspannungsnetz umfasst. Hierbei wird von einem Generator eine Niedervoltspannung erzeugt, die das Niederspannungsnetz sowie einen Transformator des Kraftfahrzeugs speist. Dieser Transformator ist dazu ausgebildet, die Niedervoltspannung in eine Hochvoltspannung zu wandeln, mit der parallel zu Verbrauchern des Niederspannungsnetzes auch Verbraucher des Hochspannungsnetzes zu betreiben sind.

Ein Verfahren zum Versorgen eines Elektromotors mit einem Wechselstrom ist in der Druckschrift US 2010 0 140 003 A1 beschrieben. Hierbei wird je nach Anforderung des Elektromotors diesem über mindestens eine Pulsweitenmodulation eine elektrische Spannung bereitgestellt, wobei zwischen mehreren Arten, bspw. drei Arten, einer jeweils zu verwendenden Pulsweitenmodulation ausgewählt wird.

Aus der Druckschrift US 2013 0 106 365 A1 ist bekannt, einen Energiespeicher eines elektrischen Kraftfahrzeugs über eine externe Energiequelle aufzuladen. Dabei ist es möglich, den Energiespeicher des Kraftfahrzeugs mit der externen Energiequelle galvanisch getrennt oder direkt aufzuladen.

Ein Brennstoffzellensystem, über das elektrische Lasten mit elektrischer Energie zu versorgen sind, ist in der Druckschrift US 2014 0 152 089 A1 beschrieben. Hierbei ist zwischen jeweils einer Brennstoffzelle und jeweils einer elektrischen Last ein Wechselrichter angeordnet, der dazu ausgebildet ist, eine von der jeweiligen Last benötigte mehrphasige Hochvoltspannung zu erzeugen, wobei störende Geräusche durch Auswahl einer Differenz von Phasen der Hochvoltspannungen vermieden werden.

Aus der Druckschrift US 2014 0 225 432 A1 ist ein Stromwandler bekannt, der drei Spulen umfasst und zum Austausch von elektrischer Energie zwischen verschiedenen Spannungsquellen und Spannungsnetzen eines elektrischen Kraftfahrzeugs ausgebildet ist.

Aus der Druckschrift JP5853094B2 sind auch ein Verfahren, einen Multikonverter und ein Energieversorgungssystem für ein elektrisches Netz bekannt.

Vor diesem Hintergrund war es eine Aufgabe der vorliegenden Erfindung, ein Verfahren sowie eine Einrichtung bereitzustellen, mit dem bzw. der Spannungen mit unterschiedlichen maximalen Werten zu erzeugen sind, wobei ein erster Verbraucher, dem eine erste Spannung mit einem ersten Wert bereitzustellen ist, durch eine zweite Spannung mit einem zweiten Wert, der einem zweiten Verbraucher bereitzustellen ist, nicht gestört wird.

Diese Aufgabe wird mit dem Verfahren gemäß Patentanspruch 1, einem Multilevelkonverter gemäß dem unabhängigen Patentanspruch 11 sowie einem Energieversorgungssystem gemäß dem unabhängigen Patentanspruch 20 gelöst. Ausgestaltungen des Verfahrens, des Multilevelkonverters und des Energieversorgungssystems ergeben sich aus den abhängigen Patentansprüchen und der Beschreibung.

Das erfindungsgemäße Verfahren ist zum Betreiben eines elektrischen Netzes vorgesehen, das ein erstes Teilnetz und ein zweites Teilnetz umfasst, die über mindestens einen Transformator miteinander verbunden und durch diesen voneinander galvanisch getrennt werden. Dabei wird mindestens eine Primärseite des mindestens einen Transformators mit einer ersten Windungszahl dem ersten Teilnetz und mindestens mindestens eine Sekundärseite des mindestens einen Transformators mit einer zweiten Windungszahl dem zweiten Teilnetz zugeordnet. Das erste Teilnetz weist einen Multilevelkonverter mit einer Mehrzahl an Einzelmodulen auf, wobei jedes Einzelmodul einen elektrischen Energiespeicher aufweist. Von dem Multilevelkonverter wird mindestens eine erste bzw. primäre elektrische Wechselspannung bereitgestellt und/oder erzeugt, die mit mindestens einer zweiten bzw. sekundären elektrischen Wechselspannung moduliert wird, wobei entsprechend mindestens eine resultierende elektrische Wechselspannung gebildet wird. Die mindestens eine aus einer derartigen Modulation resultierende elektrische Wechselspannung wird dem mindestens einen Transformator bereitgestellt und von diesem auf entsprechend mindestens eine ausgehende elektrische Wechselspannung transformiert, die dem zweiten Teilnetz bereitgestellt wird.

Das bedeutet, dass, wenn bspw. drei erste Wechselspannungen bereitgestellt und jeweils mit einer zweiten Wechselspannung moduliert werden, drei resultierende Wechselspannungen gebildet werden und drei Transformatoren bereitgestellt werden, wobei je eine resultierende elektrische Wechselspannung je einem Transformator der drei Transformatoren bereitgestellt wird und von dem jeweiligen Transformator in eine ausgehende Wechselspannung transformiert wird, so dass letztlich in diesem Beispielfall drei ausgehende Wechselspannungen dem zweiten Teilnetz bereitgestellt werden.

Üblicherweise ist die erste Windungszahl der Primärseite des mindestens einen Transformators größer als die zweite Windungszahl der Sekundärseite. Somit ist eine maximale Amplitude der mindestens einen resultierenden Wechselspannung des ersten Teilnetzes und somit eines Hochspannungsnetzes größer als eine Amplitude der mindestens einen ausgehenden Wechselspannung für das zweite Teilnetz, das entsprechend als Niederspannungsnetz ausgebildet ist.

Bei dem Verfahren ist vorgesehen, dass die mindestens eine erste Wechselspannung eine Amplitude mit einem ersten Wert und eine Frequenz mit einem ersten Wert aufweist, und dass die mindestens eine zweite Wechselspannung eine Amplitude mit einem zweiten Wert und eine Frequenz mit einem zweiten Wert aufweist. Dabei wird der erste Wert der Amplitude der mindestens einen ersten Wechselspannung üblicherweise größer als der zweite Wert der Amplitude der zweiten Wechselspannung eingestellt. Der erste Wert der Frequenz der mindestens einen ersten Wechselspannung wird üblicherweise kleiner als der zweite Wert der Frequenz der mindestens einen zweiten Wechselspannung eingestellt. Alternativ ist es möglich, dass der erste Wert der Amplitude der mindestens einen ersten Wechselspannung kleiner als der zweite Wert der zweiten Wechselspannung ist. Außerdem ist es auch möglich, dass der Wert der Frequenz der mindestens einen ersten Wechselspannung größer als der Wert der Frequenz der mindestens einen zweiten Wechselspannung ist.

In Ausgestaltung wird die mindestens eine erste Wechselspannung zwischen einem Anschluss des Multilevelkonverters für einen Verbraucher des ersten Teilnetzes und einem Referenzpunkt des Multilevelkonverters mit der mindestens einen zweiten Wechselspannung moduliert. Hierbei wird als Referenzpunkt bspw. ein Sternpunkt des Multilevelkonverters gewählt.

Üblicherweise wird die mindestens eine zweite Wechselspannung, unter Umsetzung einer Art Amplitudenmodulation, auf die mindestens eine erste Wechselspannung moduliert und somit dieser hinzuaddiert, wobei die resultierende Wechselspannung als Summe der mindestens einen ersten Wechselspannung und der mindestens einen zweiten Wechselspannung bereitgestellt wird.

Weiterhin ist es möglich, dass von dem Multilevelkonverter mehrere, bspw. drei, zueinander phasenverschobene erste bzw. primäre Wechselspannungen bzw. Phasen bereitgestellt werden, die mit der mindestens einen zweiten bzw. sekundären Wechselspannung moduliert werden. Hierbei ist vorgesehen, jede der ersten Wechselspannungen mit jeweils einer phasenindividuell einzustellenden zweiten Wechselspannung zu modulieren. Alternativ hierzu werden sämtliche erste Wechselspannungen mit derselben zweiten Wechselspannung moduliert.

In Ausgestaltung wird eine jeweilige der mehreren zueinander phasenverschobenen ersten Wechselspannungen durch einen Vollabgriff und/oder einen Teilabgriff von einem jeweiligen durch eine Kombination aus mehreren miteinander verschalteten Einzelmodulen gebildeten Strang in Bezug zu einem Referenzpunkt bereitgestellt und jeweils mit der mindestens einen zweiten Wechselspannung moduliert.

Dabei ist es möglich, dass eine jeweilige der mehreren ersten Wechselspannungen zwischen einem jeweiligen Phasenanschluss des Multilevelkonverters für einen Verbraucher des ersten Teilnetzes und dem Referenzpunkt des Multilevelkonverters mit der mindestens einen zweiten Wechselspannung moduliert wird.

In Ausgestaltung wird die mindestens eine erste Wechselspannung bzw. Phase mit der mindestens einen zweiten Wechselspannung moduliert und somit angeregt. Die hierbei durchgeführte Modulation wird relativ zu dem Referenzpunkt des Multilevelkonverters, bspw. zwischen einem jeweiligen Anschluss des Multilevelkonverters und dem Referenzpunkt, moduliert, wobei ein jeweiliger Anschluss für die mindestens eine erste Wechselspannung bzw. Phase vorgesehen ist. Falls mit dem Multilevelkonverter mehrere erste Wechselspannungen und somit Phasen erzeugt werden, kann die jeweilige Modulation mit der mindestens einen zweiten Wechselspannung kompensiert werden.

In Ausgestaltung wird eine jeweilige resultierende Wechselspannung der mehreren resultierenden Wechselspannungen einem jeweiligen Transformator von entsprechend mehreren Transformatoren bereitgestellt, der die jeweilige resultierende Wechselspannung in eine jeweilige ausgehende Wechselspannung transformiert.

Dabei wird eine jeweilige ausgehende Wechselspannung der entsprechend mehreren ausgehenden Wechselspannungen über einen jeweiligen Gleichrichter von entsprechend mehreren Gleichrichtern in eine jeweilige ausgehende Gleichspannung überführt, wobei die jeweiligen ausgehenden Gleichspannungen durch eine Verschaltung der mehreren Gleichrichter untereinander in eine Gesamtspannung überführt werden.

Der mehrere Einzelmodule mit Energiespeichern umfassende Multilevelkonverter ist ebenfalls als Energiespeicher bzw. Energiequelle ausgebildet, mit dem Verbrauchern der Teilnetze Wechselspannungen mit unterschiedlichen Frequenzen bereitgestellt werden. Hierbei werden Verbrauchern des ersten Teilnetzes Wechselspannungen mit jeweils bedarfsgerecht angepassten Amplituden und Frequenzen bereitgestellt.

Weiterhin wird Verbrauchern des zweiten Teilnetzes über den mindestens einen Transformator abhängig von der mindestens einen resultierenden Wechselspannung die mindestens eine ausgehende Wechselspannung bereitgestellt, wobei deren Frequenz sowie Amplitude von der Frequenz und Amplitude der mindestens einen resultierenden Wechselspannung sowie von einem Verhältnis der beiden Windungszahlen des mindestens einen Transformators abhängig ist.

Außerdem weist der Multilevelkonverter mehrere verteilte Einzelmodule auf, wobei von einem Energiespeicher eines jeweiligen Einzelmoduls eine Gleichspannung oder eine Wechselspannung bereitgestellt wird, wobei für den Fall, dass von einem jeweiligen Energiespeicher eine Gleichspannung bereitgestellt wird, diese Gleichspannung von dem Multilevelkonverter in eine Wechselspannung gewandelt wird.

Der erfindungsgemäße Multilevelkonverter bzw. mehrstufige Konverter, der auch als Multilevelumrichter zu bezeichnen ist, ist in einem elektrischen Netz anzuordnen, das ein erstes Teilnetz und ein zweites Teilnetz umfasst, die über mindestens einen Transformator miteinander zu verbinden und durch diesen voneinander galvanisch zu trennen sind, wobei eine Primärseite des mindestens einen Transformators mit einer ersten Windungszahl dem ersten Teilnetz und eine Sekundärseite des mindestens einen Transformators mit einer zweiten Windungszahl dem zweiten Teilnetz zuzuordnen ist. Der Multilevelkonverter ist in dem ersten Teilnetz anzuordnen und weist eine Mehrzahl an Einzelmodulen auf, wobei jedes Einzelmodul einen elektrischen Energiespeicher aufweist. Der Multilevelkonverter ist dazu ausgebildet, mindestens eine erste elektrische Wechselspannung bereitzustellen und/oder zu erzeugen und mit mindestens einer zweiten elektrischen Wechselspannung zu modulieren, wobei dem mindestens einen Transformator von dem Multilevelkonverter entsprechend mindestens eine resultierende elektrische Wechselspannung bereitzustellen ist, die von dem mindestens einen Transformator auf entsprechend mindestens eine ausgehende elektrische Wechselspannung zu transformieren und dem zweiten Teilnetz bereitzustellen ist.

Dem Multilevelkonverter ist eine Kontrolleinheit zugeordnet, die dazu ausgebildet ist, Werte von mindestens einem physikalischen Parameter, bspw. einer Amplitude und/oder einer Frequenz, der mindestens einen ersten Wechselspannung und/oder der mindestens einen zweiten Wechselspannung einzustellen. Je nach Definition ist diese Kontrolleinheit als Komponente des Multilevelkonverters ausgebildet.

Weiterhin sind mindestens zwei Einzelmodule des Multilevelkonverters, in der Regel sämtliche Einzelmodule, gleich ausgebildet.

Der Multilevelkonverter ist dazu ausgebildet, die mindestens eine erste Wechselspannung aus einer Einzelspannung von einer Energiequelle bzw. einem Energiespeicher mindestens eines Einzelmoduls zu erzeugen bzw. bereitzustellen, wobei mehrere erste Wechselspannungen einander überlagert und/oder zueinander zeitlich phasenverschoben werden.

Außerdem ist der Multilevelkonverter dazu ausgebildet, mindestens zwei Einzelmodule in Reihe und/oder zueinander parallel zu schalten, und die mindestens eine erste Wechselspannung aus einer Kombination von Einzelspannungen der mindestens zwei miteinander zu kombinierenden Einzelmodule bereitzustellen. Hierbei werden einzelne Einzelmodule je nach Bedarf eingeschaltet oder ausgeschaltet.

Der Multilevelkonverter weist mehrere, bspw. drei Stränge auf, wobei jeder Strang eine Kombination aus mehreren miteinander verschalteten, üblicherweise gleich ausgebildeten Einzelmodulen aufweist, wobei mit jedem Strang jeweils eine erste Wechselspannung und somit Phase zu erzeugen ist. Der Wert der Amplitude der jeweiligen ersten Wechselspannung wird abhängig davon, welches Einzelmodul eines jeweiligen Stranges ein- oder ausgeschaltet ist und wie mehrere eingeschaltete Einzelmodule des Strangs zueinander in Reihe und/oder parallel geschaltet werden, eingestellt.

In Ausgestaltung ist der Multilevelkonverter dazu ausgebildet, durch die mehreren Stränge mehrere zueinander phasenverschobene erste Wechselspannungen bereitzustellen und jeweils mit der mindestens einen zweiten Wechselspannung zu entsprechend mehreren resultierenden Wechselspannungen zu modulieren.

Dabei kann der Multilevelkonverter ferner dazu ausgebildet sein, eine jeweilige Wechselspannung der mehreren ersten Wechselspannungen zwischen einem jeweiligen Phasenanschluss des Multilevelkonverters für einen Verbraucher des ersten Teilnetzes und einem Referenzpunkt des Multilevelkonverters mit der mindestens einen zweiten Wechselspannung zu modulieren.

Dabei entspricht der Referenzpunkt einem Sternpunkt des Multilevelkonverters.

Darüber hinaus ist der Multilevelkonverter in weiterer Ausgestaltung dazu ausgebildet, eine jeweilige resultierende Wechselspannung der mehreren resultierenden Wechselspannungen einem jeweiligen Transformator von entsprechend mehreren Transformatoren bereitzustellen, der die jeweilige resultierende Wechselspannung in eine jeweilige ausgehende Wechselspannung transformiert.

Dem Multilevelkonverter ist mindestens eine zusätzliche Energiequelle bzw. mindestens ein zusätzlicher Energiespeicher zugeordnet, die bzw. der dazu ausgebildet ist, die mindestens eine zweite Wechselspannung bereitzustellen.

Die Energiespeicher der Einzelmodule sind in der Regel als Gleichspannungsquellen ausgebildet. Der Multilevelkonverter weist mindestens einen Wandler auf, der dazu ausgebildet ist, eine als Gleichspannung ausgebildete Einzelspannung eines Energiespeichers mindestens eines Einzelmoduls in eine Wechselspannung umzuwandeln und daraus die mindestens eine erste Wechselspannung bereitzustellen.

Üblicherweise wird auf die mindestens eine erste niederfrequente Wechselspannung die mindestens eine zweite hochfrequente Wechselspannung moduliert.

Weiterhin wird die Primärseite des mindestens einen Transformators durch den Multilevelkonverter, d. h. durch die von dem Multilevelkonverter bereitgestellte mindestens eine resultierende Wechselspannung, angeregt.

Der mindestens eine Transformator weist eine Hochpasscharakteristik auf, wobei durch den mindestens einen Transformator aus der resultierenden Wechselspannung nur Anteile berücksichtigt und auf die mindestens eine ausgehende Wechselspannung transformiert werden, die mindestens so groß wie eine Grenzfrequenz sind.

Ferner kann mindestens ein Kondensator elektrisch in Serie mit der Primärseite des mindestens einen Transformators verbunden werden, um zusammen mit der lastabhängigen effektiven Impedanz der Primärseite des mindestens einen Transformators, beeinflusst unter anderem von der Induktivität, dem Innenwiderstand und der übertragenen Leistung des Transformators, eine Serienresonanz zu bilden. Die Serienresonanz erlaubt aufgrund eines ausgeprägten Minimums der Impedanz der Kombination über der Speisefrequenz nahe der Resonanz des mindestens einen Transformators und des mindestens einen Kondensators maximale Leistungsübertragung bei einer eben dieser Frequenz, während die Impedanz für niedrigere und höhere Frequenzen ansteigt und die übertragene Leistung entsprechend absinkt. Der sich aufgrund des mindestens einen Kondensators herausbildende Frequenzfilter kann erfindungsgemäß zweierlei ausgenutzt werden. Erstens kann die genannte Frequenz durch Wahl der Kapazität des mindestens einen Kondensators und der elektrischen Eigenschaften des mindestens einen Transformators, beispielsweise der Induktivität, so gestaltet werden, dass beispielsweise die Impedanz für eine erste niederfrequente Wechselspannung deutlich höher als für eine zweite hochfrequente Wechselspannung ist. Vorzugsweise ist die Impedanz für die erste, niederfrequente Wechselspannung mindestens um einen Faktor 100, besonders vorzughaft mindestens um einen Faktor 10'000, größer als die Impedanz für die zweite, hochfrequente Wechselspannung. Zweitens kann die Leistungsübertragung aus einer zweiten, hochfrequenten Wechselspannung über den mindestens einen Transformator durch effektive Änderungen der Frequenz der zweiten, hochfrequenten Wechselspannung gesteuert oder geregelt werden. Die Steuerung oder Regelung der Leistungsübertragung über die Frequenz kann beispielsweise zur mindestens eines Spannungswertes und/oder mindestens eines Stromwertes auf einer Sekundärseite des mindestens einen Transformators genutzt werden. Die Steuerung und oder Regelung kann neben der Frequenz der zweiten, hochfrequenten Wechselspannung die Amplitude der zweiten, hochfrequenten Wechselspannung als zweiten Freiheitsgrad einsetzen.

Das erfindungsgemäße Energieversorgungssystem umfasst ein elektrisches Netz, das ein erstes Teilnetz und ein zweites Teilnetz umfasst, die über mindestens einen Transformator miteinander verbunden und durch diesen voneinander galvanisch getrennt sind, wobei eine Primärseite des mindestens einen Transformators eine erste Windungszahl aufweist und dem ersten Teilnetz zugeordnet ist, und wobei eine Sekundärseite des mindestens einen Transformators eine zweite Windungszahl aufweist und dem zweiten Teilnetz zugeordnet ist. Das erste Teilnetz umfasst einen Multilevelkonverter mit einer Mehrzahl an Einzelmodulen, wobei jedes Einzelmodul einen elektrischen Energiespeicher aufweist. Der Multilevelkonverter ist dazu ausgebildet, mindestens eine erste elektrische Wechselspannung bereitzustellen und/oder zu erzeugen und mit mindestens einer zweiten elektrischen Wechselspannung bzw. Eingangsspannung zu modulieren, wobei entsprechend mindestens eine resultierende Wechselspannung gebildet wird. Die mindestens eine daraus resultierende elektrische Wechselspannung ist dem mindestens einen Transformator bereitzustellen. Der mindestens eine Transformator ist dazu ausgebildet, die mindestens eine resultierende elektrische Wechselspannung auf entsprechend mindestens eine ausgehende elektrische Wechselspannung bzw. Ausgangsspannung zu transformieren und dem zweiten Teilnetz bereitzustellen.

In Ausgestaltung ist die erste Windungszahl einer Spule der Primärseite des mindestens einen Transformators größer als die zweite Windungszahl einer Spule der Sekundärseite des mindestens einen Transformators. Alternativ ist es denkbar, dass die erste Windungszahl der Spule der Primärseite kleiner als die zweite Windungszahl der Spule der Sekundärseite ist.

Das Energieversorgungssystem ist bspw. in einem Kraftfahrzeug anzuordnen.

Weiterhin ist dem ersten Teilnetz in möglicher Ausgestaltung als Verbraucher eine elektrische Maschine zuzuordnen, die mehrere Phasen aufweist, wobei der Multilevelkonverter dazu ausgebildet ist, jeder Phase jeweils eine erste Wechselspannung bereitzustellen. Die mehreren Phasen können beispielsweise jeweils mit eine ersten Wechselspannung versorgt werden, die gegeneinander einen Phasenversatz aufweisen.

Der vorgestellte erfindungsgemäße Multilevelkonverter ist in Ausgestaltung als Komponente des vorgestellten erfindungsgemäßen Energieversorgungssystems ausgebildet, wobei mit dem Multilevelkonverter und/oder dem Energieversorgungssystem Verbraucher des Netzes, d. h. mindestens ein Verbraucher des ersten Teilnetzes, der üblicherweise als elektrische Maschine ausgebildet ist, sowie mindestens ein Verbraucher des zweiten Teilnetzes mit elektrischer Energie zu versorgen sind. In Ausgestaltung ist hierbei vorgesehen, dass eine derartige elektrische Maschine als elektrischer Motor betrieben wird, mit dem elektrische Energie in mechanische Energie umgewandelt wird. Alternativ oder ergänzend ist es auch möglich, dass diese elektrische Maschine je nach Anforderung als elektrischer Generator betrieben wird.

In Ausgestaltung umfasst das Energieversorgungssystem ferner mindestens einen Gleichrichter, der dazu ausgebildet ist, die mindestens eine ausgehende elektrische Wechselspannung in entsprechend mindestens eine Gleichspannung zu überführen.

In weiterer Ausgestaltung ist das erfindungsgemäße Energieversorgungssystem dazu ausgebildet, mehrere erste Wechselspannungen bereitzustellen und diese mehreren ersten Wechselspannungen jeweils mit mindestens einer zweiten Wechselspannung zu entsprechend mehreren resultieren Wechselspannungen zu modulieren, wobei das Energieversorgungssystem entsprechend mehrere Transformatoren umfasst, wobei jeweils ein Transformator dazu ausgebildet ist, jeweils eine der mehreren resultierenden Wechselspannungen in jeweils eine ausgehende Wechselspannung zu transformieren, und wobei das Energieversorgungssystem ferner entsprechend mehrere Gleichrichter umfasst, die den mehreren Transformatoren nachgeschaltet sind, wobei ein jeweiliger Gleichrichter dazu ausgebildet ist, eine jeweilige ausgehende Wechselspannung eines Transformators in eine jeweilige Gleichspannung zu überführen, wobei die mehreren Gleichrichter untereinander so verschaltet sind, dass darüber die jeweiligen Gleichspannungen in eine Gesamtspannung überführbar sind. Die Verschaltung der Gleichrichter untereinander ist in Abhängigkeit der gewünschten Gesamtspannung einzustellen bzw. zu realisieren.

Falls das Energieversorgungssystem und das Netz für ein Kraftfahrzeug vorgesehen sind, ist das Netz auch als Bordnetz des Kraftfahrzeugs ausgebildet und/oder zu bezeichnen.

Entsprechend sind die beiden Teilnetze als Teilbordnetze des Kraftfahrzeugs ausgebildet und/oder zu bezeichnen, die mit Spannungen zu betreiben sind, deren Amplituden bzw. maximale Werte unterschiedlich groß sind. In diesem Fall ist weiterhin vorgesehen, dass die elektrische Maschine als Verbraucher des ersten Teilnetzes, dessen Spannung eine Amplitude mit einem großen Wert aufweist, sofern sie als elektrischer Motor betrieben wird, zum Antreiben bzw. Fortbewegen des Kraftfahrzeugs ausgebildet ist. Falls die elektrische Maschine alternativ hierzu als elektrischer Generator betrieben wird, ist mit dieser mechanische Energie des Kraftfahrzeugs, bspw. bei einem Rekuperationsbetrieb, in elektrische Energie zu wandeln, wobei dabei bereitgestellte elektrische Energie in einem Energiespeicher des elektrischen Netzes zu speichern ist. Ein Verbraucher des zweiten Teilnetzes, dessen Spannung eine Amplitude mit einem geringen Wert aufweist, ist bspw. zur Durchführung einer Kontrollfunktion des Kraftfahrzeugs ausgebildet.

Das vorgestellte erfindungsgemäße Verfahren ist mit dem Multilevelkonverter und/oder dem Energieversorgungssystem durchzuführen, wobei das Verfahren mit dem Multilevelkonverter und/oder dem Energieversorgungssystem zu kontrollieren und somit zu steuern und/oder zu regeln ist.

In Ausgestaltung wird eine Anregung mindestens einer Primärseite und somit einer primären Spule bzw. Wicklung des mindestens einen Transformators durch den Multilevelkonverter erzeugt, der bspw. auch als Hochspanungs-Multilevelkonverter ausgebildet und/oder zu bezeichnen ist, falls das erste Teilnetz mit einer höheren Spannung als das mindestens eine zweite Teilnetz zu betreiben ist. Der Wert der Frequenz der mindestens einen ersten Wechselspannung, die von dem Multilevelkonverter bereitgestellt wird und mit der der Verbraucher des ersten Teilnetzes zu versorgen ist, ist in der Regel vergleichsweise niedrig und beträgt maximal zwei Kilohertz. Dagegen ist die Frequenz der mindestens einen zweiten Wechselspannung, die zur Modulation der mindestens einen ersten Wechselspannung verwendet wird, größer als der Wert der Frequenz der mindestens einen ersten Wechselspannung.

Der Multilevelkonverter ist bspw. als modularer Multilevelkonverter (modular multilevel converter, MMC) oder MMSPC ausgebildet. Ein als MMSPC ausgebildeter Multilevelkonverter ist in der Druckschrift "Modular Multilevel Converter with Series and Parallel Module Connectivity: Topology and Control."(IEEE Transaction on Power Electronics, vol. 30, no. 1, pp. 203 - 215, 2015, doi: 10.1109/TPEL.2014.2310225) von S. M. Goetz, A. V. Peterchev und T. Weyh, der Druckschrift "Sensorless scheduling of the modular multilevel series-parallel converter: enabling a flexible, efficient, modular battery" (IEEE Applied Power Electronics Conference and Exposition (APEC), doi: 10.1109/APEC.2016.7468193) von S. M. Goetz, Z. Li, A. V. Peterchev, X. Liang, C. Zhang und S. Lukic sowie der Druckschrift "Control of Modular Multilevel Converter with Parallel Connectivity-Application to Battery Systems" (IEEE Transactions on Power Electronics, doi: 10.1109/TPEL.2016.2645884) von S. M. Goetz, Z. Li, X. Liang, C. Zhang, S. Lukic und A. V. Peterchev beschrieben. Diverse als MMC ausgebildete Multilevelkonverter sind in der Druckschrift "Recent Advances and Industrial Applications of Multilevel Converters" (IEEE Transactions on Industrial Electronics, vol. 57, no. 8, pp. 2553 - 2580, 2010, doi: 10.1109/TIE.2010.2049719) von S. Kouro, M. Malinowski,K. Gopakumar, J. Pou, L. G. Franquelo, B. Wu, J. Rodriguez, M. A. Perez und J. I. Leon detailliert dargestellt.

In der Regel weist die mindestens eine zu erzeugende erste Wechselspannung eine hohe Dynamik auf. Üblicherweise ist der Wert der Amplitude der mindestens einen ersten Wechselspannung um mehrere Größenordnungen größer als der Wert der Amplitude der mindestens einen zweiten Wechselspannung. Durch Kombination mehrerer erster Wechselspannungen, die von dem Multilevelkonverter überlagert werden, ist ein sogenanntes Frequenzmultiplexing für die ersten Wechselspannungen möglich, wobei die derart miteinander kombinierten ersten Wechselspannungen zum Versorgen des Verbrauchers des ersten Teilnetzes ausgehend von dem Multilevelkonverter vorgesehen sind.

Eine Hochpasscharakteristik des mindestens einen Transformators ist durch Auswahl eines Werts einer Induktivität mindestens einer der beiden Spulen bzw. des Transformators einzustellen, wobei die Induktivität der jeweiligen Spule abhängig von ihrer Windungszahl ist.

Die Anregung des mindestens einen Transformators wird durch den Wert der Frequenz und/oder der Amplitude der entsprechend mindestens einen resultierenden Wechselspannung, die von dem Multilevelkonverter aus der Modulation bereitgestellt wird, eingestellt. Dabei wird zumindest die Amplitude und/oder Frequenz der ersten Wechselspannungen an Erfordernisse des Verbrauchers des ersten Teilnetzes angepasst. Im Rahmen der von dem Multilevelkonverter durchzuführenden Modulation wird eine Art Amplitudenmodulation durchgeführt. Diese durchzuführende Modulation ist lediglich für eine erste Wechselspannung und somit eine erste Phase oder für mehrere erste Wechselspannungen und somit für mehrere Phasen durchführbar, wobei im letztgenannten Fall eine Kompensation der Modulation möglich ist.

Die Sekundärseite des mindestens einen Transformators ist in Ausgestaltung mit mindestens einem Gleichrichter und somit ggf. einer Topologie aus mehreren Gleichrichtern verbunden, wobei an dem mindestens einen Gleichrichter wiederum mindestens ein Verbraucher des zweiten Teilnetzes angeschlossen ist, wobei die von dem mindestens einen Transformator bereitgestellte mindestens eine ausgehende Wechselspannung von dem mindestens einen Gleichrichter in eine Gleichspannung umgewandelt wird. Der mindestens eine Gleichrichter ist üblicherweise aktiv oder passiv ausgebildet und weist in der Regel mindestens eine DC-Regelstufe auf, die bspw. als Buck,- Boost-, oder Buck-Boost-Stufe ausgebildet ist. Die aus dem mindestens einen Gleichrichter gebildete Topologie ist zumindest einpulsig oder mehrpulsig, bspw. einpulsig bis zwölfpulsig ausgebildet. Zum aktiven Regeln des mindestens einen Gleichrichters ist bspw. ein als Feldeffekttransistor (FET) ausgebildeter Halbleiterbaustein zu verwenden. Zum passiven Regeln ist bspw. mindestens eine Diode zu verwenden.

Denkbar ist auch ein Gleichrichter mit Inverter, bspw. für eine Ausgabe von 100 V oder 240 V.

Bei einer möglichen Ausführungsform des Verfahrens, des Multilevelkonverters und/oder des Energieversorgungssystems ist vorgesehen, dass das erste Teilnetz als Hochspannungsversorgungsnetz (beispielsweise > 60 V, vorzugsweise >200 V) und das zweite Teilnetz als Niederspannungsversorgungsnetz (beispielsweise < 60 V) ausgebildet ist. Dabei weist das zweite Teilnetz in Ausgestaltung mindestens einen eigenen Energiespeicher, bspw. einen Kondensator und/oder eine Batterie, auf. Ein durchschnittlicher Leistungsbedarf des ersten Teilnetzes ist hierbei um ein Vielfaches, bspw. einen Faktor fünf, höher als der durchschnittliche Leistungsbedarf des zweiten Teilnetzes. Falls das Energieversorgungssystem und somit das elektrische Netz für ein Kraftfahrzeug verwendet wird, beträgt der durchschnittliche Leistungsbedarf des zweiten Teilnetzes mit einer durchschnittlichen Spannung von bspw. 12 V, 24 V, 48 V, 400 V oder 800 V 1 bis 5 kW, wobei die Spannungsebenen von Energieversorgungssystemen in Automobilen typischerweise einen Bereich von einigen Volt um die Nennspannung erlauben, wie der technischen Normenliteratur (siehe LV 124, VDA 320 und LV 124) entnommen werden kann. Dagegen beträgt der Leistungsbedarf des ersten Teilnetzes je nach Ausgestaltung des anzutreibenden Kraftfahrzeugs für dessen Antrieb bspw. 20 kW bis 400 kW.

Bei der mit dem Multilevelkonverter durchzuführenden Modulation wird über die mindestens eine zweite Wechselspannung zusätzliche Leistung in das erste Teilnetz eingespeist und dabei in eine dynamische Leistungsregelung des ersten Teilnetzes eingefügt. Damit eine aktuelle Leistung des ersten Teilnetzes, die sich aus einem eigentlichen Soll-Strom- oder Soll-Spannungsverlauf auf Grundlage der mindestens einen ersten Wechselspannung ergibt, einem aktuellen Regelsoll folgt, entspricht diese lediglich in einem zeitlichen Durchschnitt dem Leistungsbedarf des zweiten Teilnetzes und somit dessen Verbrauchern und/oder Energiespeichern. Diese zwei Bedingungen aus einem instantanen Leistungsbedarf des ersten Teilnetzes und einer durchschnittlichen Leistung des zweiten Teilnetzes bestimmen zwei Freiheitsgrade aus einem Grad der durchzuführenden Modulation und einem Grad der Leistung eines Soll-Spannungs- oder Soll-Stromverlaufs.

In möglicher Ausgestaltung ist die Modulation zum Anregen des Transformators in dem ersten Teilnetz für den mindestens einen Verbraucher des ersten Teilnetzes, bspw. mindestens eine elektrische Maschine zum Antreiben des Kraftfahrzeugs, nicht sichtbar. Durch Eliminierung von hochfrequenten Komponenten der mindestens einen resultierenden Wechselspannung in dem ersten Teilnetz wird eine elektrostatische Belastung der Verbraucher des ersten Teilnetzes verringert. Dies betrifft bspw. eine Isolierung des als elektrische Maschine ausgebildeten mindestens einen Verbrauchers, durch den unter anderem dessen Lebensdauer definiert wird. In Ausgestaltung werden die Freiheitsgrade des Multilevelkonverters als physikalische Schaltung so genutzt, dass die Modulation relativ zu einem Referenzpunkt der physikalischen Schaltung bzw. des Multilevelkonverters durchgeführt wird. Dabei entspricht dieser Referenzpunkt bspw. einem Sternpunkt des üblicherweise mehrphasigen Multilevelkonverters bzw. Multilevelumrichters. Die Modulation wird hierbei bspw. zwischen mindestens einem Anschluss einer Phase des Verbrauchers, bspw. der mehrphasigen elektrischen Maschine, und dem Referenzpunkt durchgeführt. Falls der Verbraucher mindestens einen Sternpunkt, d. h. einen Sternpunkt oder mehrere Sternpunkte aufweist, was bspw. bei einer Dreiphasensternwicklung der elektrischen Maschine der Fall ist, ist diese nicht mit dem Referenzpunkt zu verbinden. Stattdessen wird die Modulation parallel an anderen Anschlüssen für Phasen des Verbrauchers durchgeführt, wobei die Modulation lediglich zwischen den Anschlüssen der Phasen und dem Referenzpunkt, jedoch nicht zwischen Anschlüssen der Phasen des Verbrauchers vorliegt. Dabei wird der Referenzpunkt als Anschluss für den mindestens einen Transformator verwendet.

Mit dem vorgestellten Multilevelkonverter bzw. Multilevelumrichter ist mindestens eine resultierende Wechselspannung bereitzustellen, die eine geringe Verzerrung aufweist, wodurch Störungen anderer elektrischer Geräte vermieden werden. Innerhalb des ersten Teilnetzes wird elektrische Energie, die von dem Multilevelkonverter bereitgestellt wird, von der elektrischen Maschine zum Antreiben des Kraftfahrzeugs verwendet. Dabei ist es möglich, die elektrische Maschine ausgehend von dem Multilevelkonverter spannungsgesteuert zu betreiben.

Der Multilevelkonverter ist bspw. als neutral-point-clamped-(NPC)-Converter, der an einem Sternpunkt einen Neutralleiter aufweist, als Flying Capacitor, als modularer Multilevelkonverter oder als MMSPC ausgebildet, mit dem mehrere Spannungen, bspw. Wechsel- oder Drehstromspannungen, die für mindestens eine elektrische Maschine zum Antreiben eines Kraftfahrzeugs zu erzeugen sind, bereitgestellt werden. Eine derartige zur Versorgung vorgesehene Spannung weist meist einen Wert im Hochvoltbereich größer 60 Volt, üblicherweise größer 200 Volt auf und wird in der Regel aus mehreren Energiespeichern, bspw. Hochvoltspeichern, gespeist. Mindestens ein Ausgang des Multilevelkonverters ist von dem mindestens einen Hochvoltspeicher galvanisch getrennt. Falls der Multilevelkonverter mehrere Ausgänge aufweist, sind diese ebenfalls voneinander galvanisch getrennt.

Über das erste Teilnetz, das den Multilevelkonverter aufweist, ist die elektrische Maschine mit Energie zu versorgen, wobei das erste Teilnetz als Hochspannungssystem ausgebildet und/oder zu bezeichnen ist. Dagegen ist das zweite Teilnetz als Niederspannungssystem ausgebildet und/oder zu bezeichnen, über das weitere Verbraucher, bspw. Beleuchtungseinrichtungen, Nebenaggregate, Kontroll- bzw. Steuermodule oder Kommunikationseinrichtungen des Kraftfahrzeugs mit elektrischer Energie zu versorgen sind. Das zweite Teilnetz weist bspw. eine Nennspannung von 12 V, 24 V, oder 48 V (mit den erlaubten Schwankungsbereichen aus der technischen Normungsliteratur, beispielsweise LV 124 und VDA 320) auf. Dagegen weist das erste Teilnetz wesentlich höhere Spannungen von bspw. 110 V, 240 V, 400 V oder 800 V auf.

Alle Teilnetze sind über den mindestens einen Transformator voneinander galvanisch getrennt, so dass ein eventueller Halbleiterschaden im ersten Teilnetz keine leitende Verbindung zu dem zweiten Teilnetz und damit bspw. eine lebensgefährliche Berührspannung erzeugen kann. Der zum Bereitstellen der elektrischen Energie verwendete Multilevelkonverter weist ein geringes Gewicht auf und benötigt nur einen geringen Bauraum. Über den Multilevelkonverter kann mit mindestens einem Umrichter eine galvanisch trennende Wandlerfunktion umgesetzt werden. Der bspw. modulare Multilevelkonverter ist in Ausgestaltung als M2SPC (modularer Multilevel-Parallel-Seriell-Konverter) ausgebildet und umfasst Kondensatoren und/oder Batterien als mehrere Energiespeicher bzw. Komponenten der Einzelmodule des Multilevelkonverters.

Der mehrere Einzelmodule umfassende Multilevelkonverter wird als zentraler Energiespeicher des Energieversorgungssystems verwendet, wobei mit dem Multilevelkonverter innerhalb des ersten Teilnetzes eine hohe Spannung zu erzeugen ist. Ausgehend von dieser ersten hohen Spannung des Multilevelkonverters wird mit dem mindestens einen Transformator für das zweite Teilnetz eine hierzu vergleichsweise geringe Spannung bereitgestellt, wobei diese beiden Teilnetze über den mindestens einen Transformator zusätzlich galvanisch getrennt sind. Die von dem Multilevelkonverter bereitgestellte Spannung ist nur geringen Fluktuationen unterworfen. Mit dem Multilevelkonverter sind mehrere Batterien als Energiespeicher dynamisch rekonfigurierbar und somit auch für ein Kraftfahrzeug einzusetzen.

In Ausgestaltung wird mit dem üblicherweise modularen Multilevelkonverter aus mehreren Energiespeichern der Einzelmodule, die bspw. als Gleichspannungsquellen ausgebildet sind, die Wechselspannung für das erste Teilnetz, das den hohen Wert der Spannung aufweist, erzeugt. Statt einem ansonsten zu verwendenden Wandler wird bei dem vorgestellten Energieversorgungssystem das zweite Teilnetz über den mindestens einen Transformator mit dem ersten Teilnetz verbunden, wobei zwischen den beiden Teilenetzen ein Energieaustausch ermöglicht wird. Der mindestens eine Transformator wird mit der üblicherweise geringen zweiten eingehenden Wechselspannung, die auf die erste Wechselspannung moduliert wird, mit elektrischer Energie versorgt. Diese zweite Wechselspannung wird auf mindestens eine Phase, in der Regel alle Phasen, des Multilevelkonverters moduliert. Ein hierbei passend auszuwählender Referenzpunkt ermöglicht, dass die aufmodulierte zweite Wechselspannung einen Betrieb der elektrischen Maschine nicht beeinflusst.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung eine aus dem Stand der Technik bekannte elektrische Schaltung.
Figur 2 zeigt in schematischer Darstellung eine erste Ausführungsform des erfindungsgemäßen Multilevelkonverters und Diagramme zur Durchführung einer ersten Ausführungsform des erfindungsgemäßen Verfahrens.
Figur 3a zeigt in schematischer Darstellung eine erste Ausführungsform des erfindungsgemäßen Energieversorgungssystems.
Figur 3b zeigt in schematischer Darstellung eine zweite Ausführungsform des erfindungsgemäßen Energieversorgungssystems.
Figur 3c zeigt in schematischer Darstellung eine fünfte Ausführungsform des erfindungsgemäßen Energieversorgungssystems.
Figur 4a zeigt in schematischer Darstellung eine dritte Ausführungsform des erfindungsgemäßen Energieversorgungssystems.
Figur 4b zeigt in schematischer Darstellung eine vierte Ausführungsform des erfindungsgemäßen Energieversorgungssystems.
Figur 4c zeigt in schematischer Darstellung eine sechste Ausführungsform des erfindungsgemäßen Energieversorgungssystems.
Figur 5 zeigt in schematischer Darstellung die erste Ausführungsform des erfindungsgemäßen Multilevelkonverters und Diagramme zur Durchführung einer weiteren Ausführungsform des erfindungsgemäßen Verfahrens.

Die Figuren werden zusammenhängend und übergreifend beschrieben. Gleichen Komponenten sind dieselben Bezugsziffern zugeordnet.

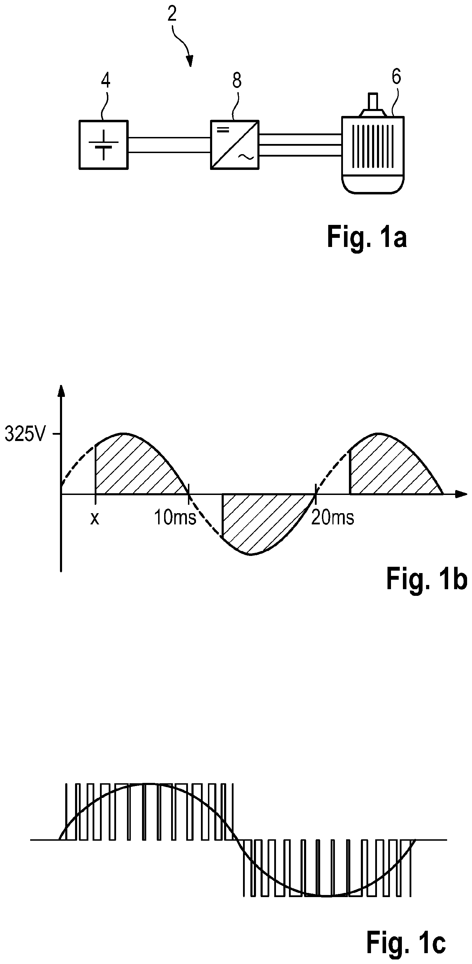

Die in Figur 1a schematisch dargestellte Schaltung 2 umfasst eine Energiequelle 4 und eine Hochspannungslast 6, die beide über einen Inverter 8 verbunden sind, der dazu ausgebildet ist, eine von der Energiequelle 4 erzeugte Gleichspannung in eine Wechselspannung zu wandeln und der Hochspannungslast 6 bereitzustellen.

Dabei ist es möglich, wie das Diagramm aus Figur 1b zeigt, durch eine Phasenanschnittssteuerung eine variable Durchschnittsspannung zu erzeugen. Alternativ ist es möglich, wie das Diagramm aus Figur 1c zeigt, durch eine Dreipunkt-Pulsweitenmodulation eine variable Durchschnittsspannung zu erzeugen.

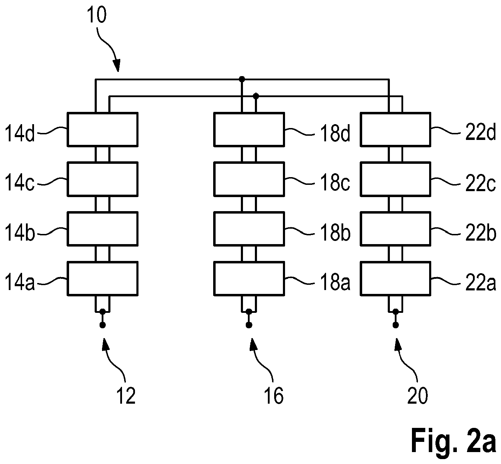

Die in Figur 2a schematisch dargestellte erste Ausführungsform des erfindungsgemäßen Multilevelkonverters 10 umfasst einen ersten Strang 12 mit vier Einzelmodulen 14a, 14b, 14c, 14d, einen zweiten Strang 16 mit ebenfalls vier Einzelmodulen 18a, 18b, 18c, 18d und einen dritten Strang 20 mit vier Einzelmodulen 22a, 22b, 22c, 22d. Dabei ist es möglich, jeden der genannten Stränge 12, 16, 20 auch als Arm des Multilevelkonverters 10 zu bezeichnen. Dieser hier modulare Multilevelkonverter ist bspw. als MMC, MMSPC oder Matroschka-Umrichter ausgebildet, der in der deutschen Patentanmeldung DE 10 2015 112 513 beschrieben ist. Jedes der Einzelmodule 14a, 14b, 14c, 14d, 18a, 18b, 18c, 198, 22a, 22b, 22c, 22d umfasst mindestens einen Energiespeicher, bspw. einen Kondensator oder eine Batterie, weshalb der Multilevelkonverter 10 mehrere verteilte Energiespeicher aufweist. Mit Energiespeichern der Einzelmodule 14a, 14b, 14c, 14d des ersten Strangs ist hier einer ersten Phase einer elektrischen Maschine Energie bereitzustellen. Einer zweiten Phase dieser elektrischen Maschine ist über die Einzelmodule 18a, 18b, 18c, 18d des zweiten Strangs 16 elektrische Energie bereitzustellen. Außerdem ist mit den Einzelmodulen 22a, 22b, 22c, 22d, des dritten Strangs 20 einer dritten Phase der elektrischen Maschine Energie bereitzustellen.

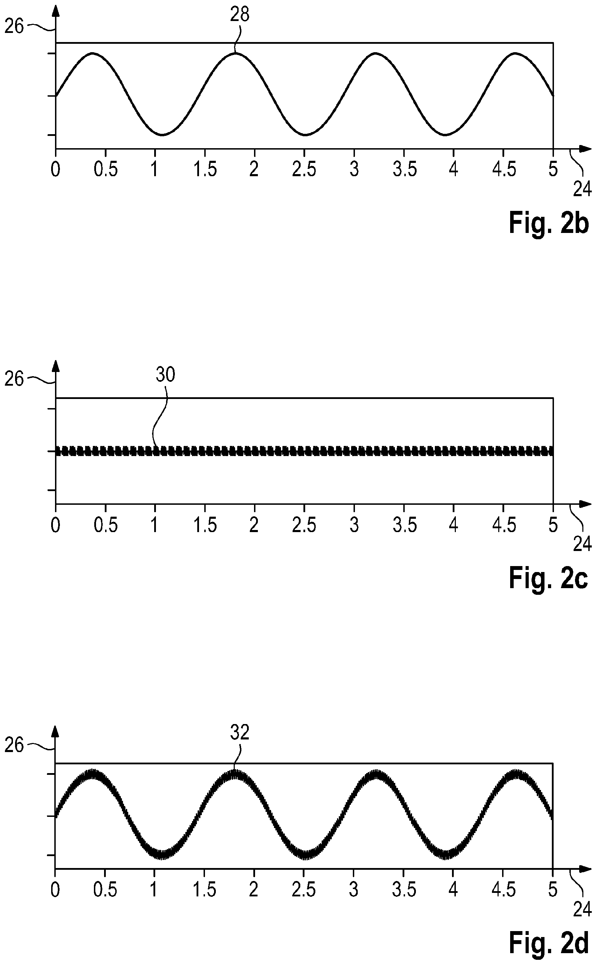

Die Figuren 2b, 2c, 2d umfassen jeweils ein Diagramm mit einer Abszisse 24, entlang der die Zeit aufgetragen ist, und einer Ordinate 26, entlang der Werte einer elektrischen Spannung aufgetragen sind. Dabei zeigt das erste Diagramm aus Figur 2b einen Verlauf 28 einer ersten Wechselspannung, die von einem Verbraucher bzw. einer Last, hier der elektrischen Maschine benötigt wird. Hierbei ist vorgesehen, dass diese Maschine innerhalb eines ersten nicht weiter dargestellten Teilnetzes direkt mit dem Multilevelkonverter 10 zu verbinden ist. Ein weiterer Verbraucher, der eine Wechselspannung mit einem geringeren Wert als der erste Verbraucher in dem ersten Teilnetz benötigt, ist in einem nicht weiter dargestellten zweiten Teilnetz angeordnet, das über mindestens einen galvanisch trennenden Transformator mit dem ersten Teilnetz zu verbinden ist.

Ein Verlauf 30 der zweiten Wechselspannung ist in dem zweiten Diagramm aus Figur 2c gezeigt, wobei ein Vergleich der Diagramme aus den Figuren 2b und 2c zeigt, dass die erste Wechselspannung eine höhere Amplitude als die zweite Wechselspannung aufweist. Dagegen weist die Frequenz der zweiten Wechselspannung eine höhere Frequenz als die erste Wechselspannung auf. Bei Durchführung einer Ausführungsform des erfindungsgemäßen Verfahrens wird die in dem Diagramm aus Figur 2c gezeigte zweite Wechselspannung mit dem Verlauf 30 auf die erste Wechselspannung mit dem Verlauf 28 aus Figur 2b addiert, wobei eine resultierende Spannung mit einem Verlauf 32, wie in Figur 2d dargestellt, erzeugt wird, die als Summenspannung bei einer Modulation der ersten Wechselspannung mit der zweiten Wechselspannung entsteht und zur Anregung der Primärseite des Transformators verwendet wird.

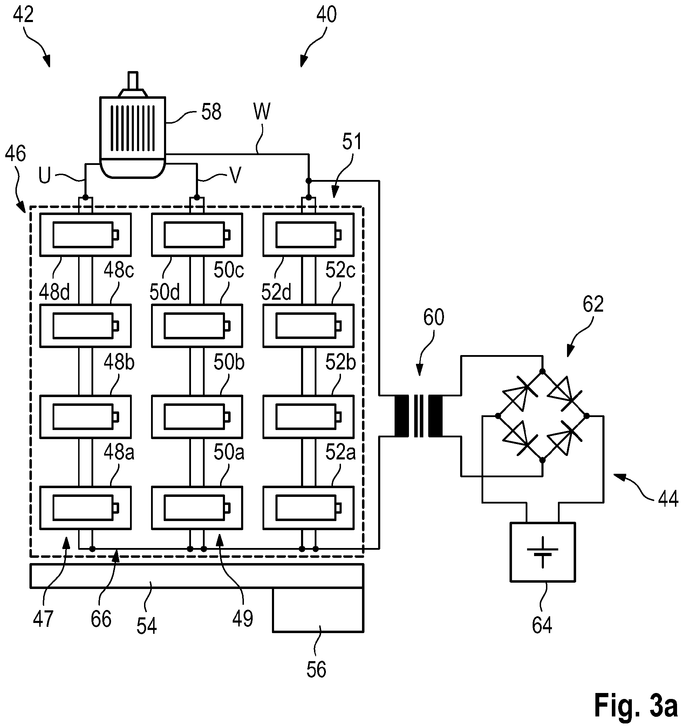

Die in Figur 3a schematisch dargestellte erste Ausführungsform des Energieversorgungssystems 40 umfasst ein erstes Teilnetz 42 und ein zweites Teilnetz 44. Das erste Teilnetz 42 umfasst eine zweite Ausführungsform des erfindungsgemäßen Multilevelkonverters 46, der wiederum drei zueinander parallel geschaltete Stränge 47, 49, 51 bzw. Arme aufweist, wobei ein erster derartiger Strang 47 ein erstes Einzelmodul 48a, ein zweites Einzelmodul 48b, ein drittes Einzelmodul 48c und ein viertes Einzelmodul 48d aufweist. Ein zweiter Strang 49 des Multilevelkonverters 46 weist ein erstes Einzelmodul 50a, ein zweites Einzelmodul 50b, ein drittes Einzelmodul 50c und ein viertes Einzelmodul 50d auf. Außerdem umfasst der Multilevelkonverter 46 einen dritten Strang 51 mit einem ersten Einzelmodul 52a, einem zweiten Einzelmodul 52b, einem dritten Einzelmodul 52c und einem vierten Einzelmodul 52d. Hierbei weisen sämtliche Einzelmodule 48a, 48b, 48c, 48d, 50a, 50b, 50c, 50d, 52a, 52b, 52c, 52d jeweils einen als Batterie oder als Kondensator ausgebildeten Energiespeicher auf.

Weiterhin umfasst der Multilevelkonverter 46 eine Kontrolleinheit 54 und einen weiteren Energiespeicher 56. Jeweils ein Strang 47, 49, 51 des Multilevelkonverters 42 ist einer Phase von insgesamt drei Phasen U, V, W eines elektrischen Verbrauchers 58 zugeordnet, der hier als elektrische Maschine ausgebildet ist.

Beim Betrieb des Multilevelkonverters 46 wird ein Wert einer Amplitude einer ersten Wechselspannung, die einer jeweiligen Phase U, V, W des Verbrauchers 58 bereitzustellen ist, über die Kontrolleinheit 54 eingestellt. Dabei ist einer ersten Phase U der erste Strang 47 mit den Einzelmodulen 48a, 48b, 48c, 48d zugeordnet. Einer zweiten Phase V des Verbrauchers 58 ist der zweite Strang 49 mit den Einzelmodulen 50a, 50b, 50c, 50d zugeordnet. Außerdem ist der dritten Phase W des Verbrauchers 58 der dritte Strang 51 mit den Einzelmodulen 52a, 52b, 52c, 52d zugeordnet.

Sämtliche Einzelmodule 48a, 48b, 48c, 48d, 50a, 50b, 50c, 50d, 52a, 52b, 52c, 52d sind gleichartig ausgebildet und weisen jeweils einen gleichartigen Energiespeicher auf. Je nachdem, welchen Wert die Amplitude der Wechselspannung aufweisen soll, die einer jeweiligen Phase U, V, W bereitzustellen ist, wird bzw. werden von der Kontrolleinheit 54 innerhalb eines jeweiligen Strangs 47, 49, 51 mindestens ein Einzelmodul 48a, 48b, 48c, 48d, 50a, 50b, 50c, 50d, 52a, 52b, 52c, 52d, in der Regel mehrere Einzelmodule 48a, 48b, 48c, 48d, 50a, 50b, 50c, 50d, 52a, 52b, 52c, 52d aktiviert, wobei je nach dem Wert der bereitzustellenden Amplitude der Wechselspannung bspw. mindestens zwei Einzelmodule 48a, 48b, 48c, 48d, 50a, 50b, 50c, 50d, 52a, 52b, 52c, 52d innerhalb eines jeweiligen Strangs 47, 49, 51 zueinander in Reihe und/oder parallel geschaltet werden.

Hier ist vorgesehen, dass das erste Teilnetz 42 mit einer Spannung betrieben wird, die höher als eine zweite Spannung des zweiten Teilnetzes 44 ist. Beide Teilnetze 42, 44 sind hier über einen galvanisch trennenden Transformator 60 miteinander verbunden, wobei die Primärseite des Transformators 60 dem ersten Teilnetz 42 und eine Sekundärseite des Transformators 60 dem zweiten Teilnetz 44 zugeordnet sind. Außerdem ist dem Transformator 60 innerhalb des zweiten Teilnetzes 44 ein Gleichrichter 62 nachgeschaltet, an dem ein Energiespeicher 64 angeschlossen ist.

Weiterhin ist für den Multilevelkonverter 46 ein Referenzpunkt 66 definiert, der sich hier auf einem minimalen Potential des Multilevelkonverters 46 befindet. Die Primärseite des Transformators 60 ist hier einerseits mit dem Referenzpunkt 66 verbunden. Außerdem ist die Primärseite weiterhin mit einem Anschlusspunkt verbunden, der den dritten Strang 51 des Multilevelkonverters 46 mit der dritten Phase W des Verbrauchers 58 verbindet.

Bei Durchführung einer Ausführungsform des erfindungsgemäßen Verfahrens wird mit den Einzelmodulen 48a, 48b, 48c, 48d, 50a, 50b, 50c, 50d, 52a, 52b, 52c, 52d, des jeweiligen Strangs 47, 49, 51 ein drei-Phasen System bereitgestellt.

Hierbei ist der erste Strang 47 einer ersten Phase U, der zweite Strang 49 einer zweiten Phase V und der dritte Strang 51 einer dritten Phase W des Verbrauchers 58 zugeordnet. Bei dem Verfahren wird ein Potential des Referenzpunkts 66 nicht eindeutig festgelegt, sondern als virtueller Sternpunkt auf eine Mittelpunktspannung der drei Phasen U, V, W eingeregelt.

In einer Ausführungsform des Verfahrens wird auf eine erste Wechselspannung zwischen der dritten Phase W und dem Referenzpunkt 66 eine zweite Wechselspannung als hochfrequente Oberwelle moduliert, die als Eingang für den Transformator 60 zur galvanischen Trennung dient, zugleich jedoch für den Verbraucher 58 nicht sichtbar ist. Dies wird bspw. dann erreicht, wenn Spannungen V_{w-r}, Vᵤ₋ᵣ und Vᵥ₋ᵣ zwischen jeweils einer Phase U, V, W und dem Referenzpunkt 66 identisch sind, wobei für Differenzen von Spannungen zwischen jeweils zwei Phasen U, V, W gilt: Vᵤ₋ᵥ = Vᵤ₋ᵣ - Vᵥ₋ᵣ, V_{u-w} = Vᵤ₋ᵣ - V_{w-r} und V_{u-w} = Vᵤ₋ᵣ - V_{w-r}.

Mit dem Multilevelkonverter 46, der hier als Dreiphasen-MMSPC ausgebildet ist, wird über den Transformator 60 eine integrierte galvanisch getrennte Versorgung von Verbrauchern des zweiten Teilnetzes 44 ermöglicht.

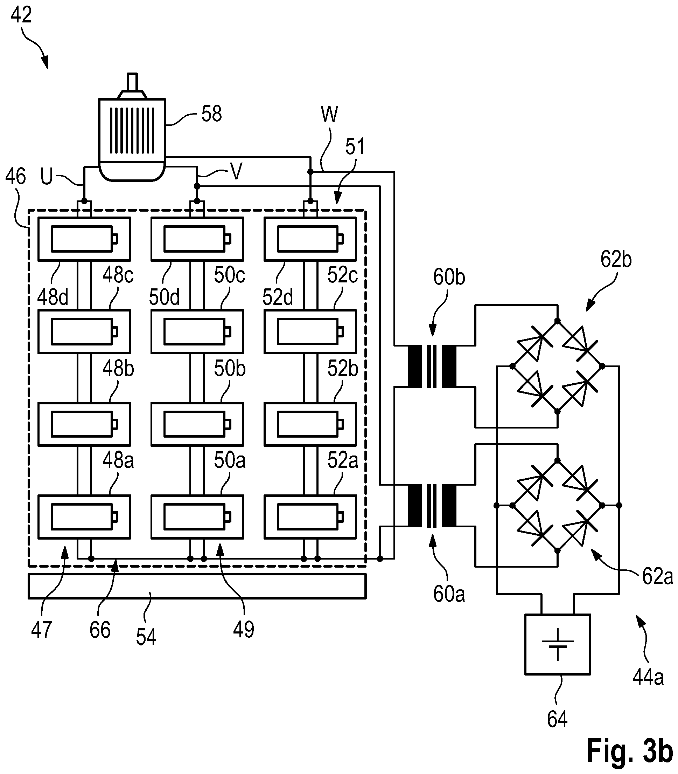

Die in Figur 3b schematisch dargestellte zweite Ausführungsform des erfindungsgemäßen Energieversorgungssystems umfasst ein erstes Teilnetz 42 und ein zweites Teilnetz 44a. Das erste Teilnetz 42 umfasst einen Multilevelkonverter 46, der weitgehend baugleich zu dem Multilevelkonverter 46 aus Figur 3a ausgebildet ist. Beide Teilnetze 42, 44a sind hier über zwei galvanisch trennende Transformatoren 60a, 60b miteinander verbunden. Dabei ist die Primärseite des Transformators 60a dem ersten Teilnetz 42 und die Sekundärseite des Transformators 60a dem zweiten Teilnetz 44a zugeordnet. Die Primärseite des Transformators 60b ist ebenfalls dem ersten Teilnetz 42 und die Sekundärseite des Transformators 60b ist entsprechend ebenfalls dem zweiten Teilnetz 44a zugeordnet. Außerdem ist dem Transformator 60a innerhalb des zweiten Teilnetz 44a ein Gleichrichter 62a nachgeschaltet. Dem Transformator 60b ist innerhalb des zweiten Teilnetzes 44a ein Gleichrichter 62b nachgeschaltet. Die Gleichrichter 62a, 62b sind hier parallel zueinander geschaltet und an einen Energiespeicher 64 angeschlossen. Alternativ dazu ist es auch denkbar, dass die Gleichrichter 62a, 62b in Reihe zueinander geschaltet sind. Eine Schaltung in Reihe wird vorzugsweise zur Erzeugung von Spannungen des zweiten Teilnetzes 44a im Hochvoltbereich (> 60 V) eingesetzt. Die Verschaltung der Gleichrichter 62a, 62b untereinander wird in Abhängigkeit davon vorgesehen, welche Gleichspannung dem Energiespeicher 64 bereitgestellt werden soll bzw. welcher Energiebedarf bei einem oder mehreren hier nicht dargestellten Verbrauchern im zweiten Teilnetzes besteht.

Weiterhin ist, wie auch in Figur 3a dargestellt, für den Multilevelkonverter ein Referenzpunkt 66, hier ein Sternpunkt, definiert. Die Primärseite des Transformators 60a ist hier einerseits mit dem Referenzpunkt 66 und andererseits mit einem Phasenanschluss des Verbrauchers 58, d. h. mit einem Anschlusspunkt verbunden, der den zweiten Strang 49 des Multilevelkonverters 46 mit der zweiten Phase V des Verbrauchers 58 verbindet. Die Primärseite des Transformators 60b ist hier einerseits mit dem Referenzpunkt 66 und andererseits mit einem Anschlusspunkt bzw. einem Phasenanschluss verbunden, der den dritten Strang 51 des Multilevelkonverters 46 mit der dritten Phase W des Verbrauchers 58 verbindet.

Demnach wird einerseits von dem zweiten Strang 49 zwischen dem der Phase V zuzuordnenden Phasenanschluss des Verbrauchers 58 und dem Referenzpunkt 66 eine erste primäre Wechselspannung abgegriffen, mit einer ersten sekundären Wechselspannung moduliert und als erste resultierende Wechselspannung dem Transformator 60a bzw. der Primärseite des Transformators 60a bereitgestellt. Ferner wird von dem dritten Strang 51 zwischen dem der Phase W zuzuordnenden Phasenanschluss des Verbrauchers 58 und dem Referenzpunkt 66 eine zweite primäre Wechselspannung abgegriffen, mit einer zweiten sekundären Wechselspannung moduliert und als zweite resultierende Wechselspannung dem Transformator 60b bzw. dessen Primärseite bereitgestellt. Die erste sekundäre Wechselspannung und die zweite sekundäre Wechselspannung sind in der Regel identisch, d. h. die jeweiligen von den Strängen 49 und 51 bereitgestellten primären Wechselspannungen werden in gleicher Weise, d. h. mit einem gleichen in der Regel hochfrequenten Signal moduliert. Die erste resultierende Wechselspannung wird von dem Transformator 60a in eine erste ausgehende Wechselspannung transformiert und durch den Gleichrichter 62a in eine erste Gleichspannung überführt. Die zweite resultierende Wechselspannung wird von dem Transformator 60b in eine zweite ausgehende Wechselspannung transformiert und durch den Gleichrichter 62b in eine zweite Gleichspannung überführt. Durch die Verschaltung der Gleichrichter 62a und 62b werden die erste Gleichspannung und die zweite Gleichspannung dem Energiespeicher 64 bereitgestellt. Durch den Multilevelkonverter 46 und die durch ihn bereitgestellten Wechselspannungen Vᵤ₋ᵥ, V_{u-w} und V_{v-w} wird ein 3-Phasensystem realisiert. Hierdurch ist das Potential des Referenzpunktes 66 nicht eindeutig festgelegt, sondern wird in der Regel lediglich willkürlich als virtueller Sternpunkt auf die Mittelpunktspannung der (hier) drei Phasenspannungen, d. h. der drei von den jeweiligen Strängen 47, 49 und 51 bereitgestellten Wechselspannungen eingeregelt. Dieser Freiheitsgrad wird nunmehr dazu genutzt, eine jeweilige Modulation der über die beiden Stränge 49 und 51 den Phasen V und W des Verbrauchers 58 bereitgestellten ersten Wechselspannungen mit einem gleichen in der Regel hochfrequenten Signal, d. h. einer zweiten Wechselspannung durchzuführen und dabei zumindest eine teilweise Kompensation der Modulation zu realisieren, so dass das hochfrequente Signal bzw. die zweite Wechselspannung für den Verbraucher 58 im Wesentlichen nicht sichtbar ist. Entsprechend kann durch näherungsweise gleiche hochfrequente Signale aufgrund der Differenzbildung der beiden hochfrequenten Signale aufgrund der Wahl der Anschlusspunkte des Verbrauchers 58 eine weitgehende Auslöschung des hochfrequenten Signales an den Anschlusspunkten des Verbrauchers 58 erreicht werden.

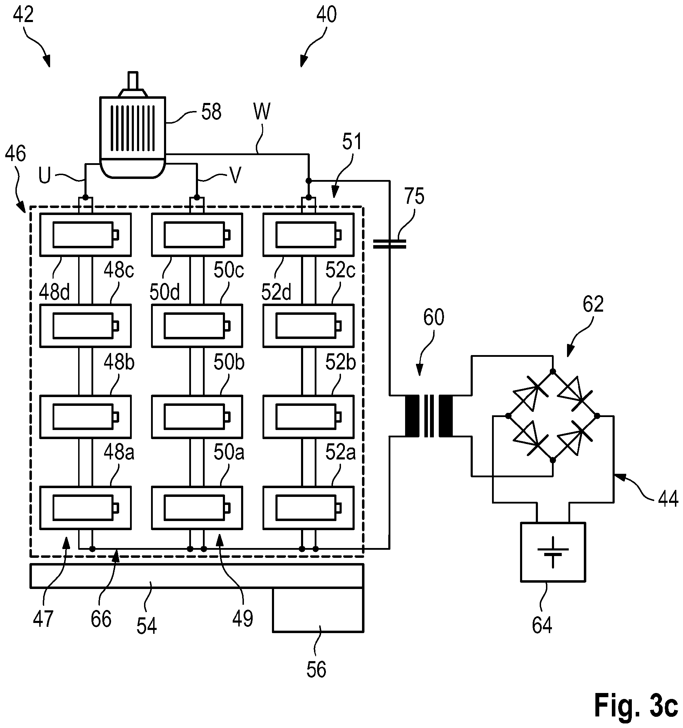

In Figur 3c wird eine weitere Ausführungsform schematisch dargestellt. Mindestens ein Kondensator 75 bildet eine Serienresonanz mit dem Transformator 60, indem er zu letzterem elektrisch in Reihe geschaltet wird. Die Wahl der elektrischen Eigenschaften des mindestens einen Kondensators 75 und des Transformators 60 kann so erfolgen, dass die Resonanzfrequenz der Frequenz des hochfrequenten Signals entspricht und somit die Kombination aus dem mindestens einen Kondensator 75 und dem Transformator 60 bei der Frequenz des hochfrequenten Signales eine niedrige elektrische Impedanz aufweist, bei den Frequenzen der Signale des Verbrauchers 58 jedoch eine hohe elektrische Impedanz, vorzugsweise mindestens um den Faktor 100 höhere elektrische Impedanz aufweist. Bei den zu wählenden elektrischen Eigenschaften handelt es sich vorzugsweise um die Induktivität des Transformators 60 und die Kapazität des mindestens einen Kondensators 75.

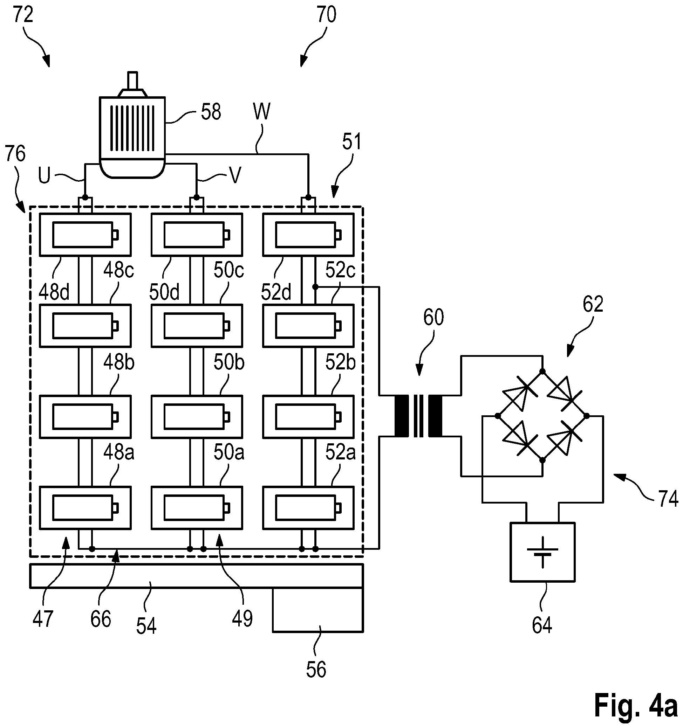

Die in Figur 4a schematisch dargestellte dritte Ausführungsform des erfindungsgemäßen Energieversorgungssystems 70 umfasst ein erstes Teilnetz 72 und ein zweites Teilnetz 74. Das erste Teilnetz 72 umfasst eine dritte Ausführungsform des erfindungsgemäßen Multilevelkonverters 76. Hierbei ist vorgesehen, dass die dritte Ausführungsform des Multilevelkonverters 76 weitgehend baugleich zu der zweiten Ausführungsform des Multilevelkonverters 46 ausgebildet ist. Außerdem umfassen die beiden Teilnetze 72, 74 der zweiten Ausführungsform des erfindungsgemäßen Energieversorgungssystems 70 dieselben Komponenten wie die erste Ausführungsform des erfindungsgemäßen Energieversorgungssystems 40 aus Figur 3.

Auch hier wird die maximale Amplitude mit dem ersten Wert für eine jeweilige Phase U, V, W des Verbrauchers 58 durch eine Reihen- und/oder Parallelschaltung der Einzelmodule 48a, 48b, 48c, 48d, 50a, 50b, 50c, 50d, 52a, 52b, 52c, 52d eines jeweiligen Strangs 47, 49, 51 bereitgestellt. Weiterhin wird auf diese mindestens eine erste bzw. primäre Wechselspannung eine zweite bzw. sekundäre Wechselspannung moduliert, deren Amplitude einen geringeren zweiten Wert aufweist. Allerdings weist diese zweite Wechselspannung eine höhere Frequenz als die erste Wechselspannung auf.

Die dritte Ausführungsform des Energieversorgungssystems 70 unterschiedet sich dadurch von der ersten Ausführungsform und zweiten Ausführungsform aus Figur 3, dass die Primärseite des Transformators 60 zwischen den beiden Teilnetzen 72, 74 mit dem Referenzpunkt 66 sowie mit einem Anschluss zwischen einem dritten Einzelmodul 52c und einem vierten Einzelmodul 52d des dritten Strangs 51 des Multilevelkonverters 46 verbunden ist. Das bedeutet, dass hier nur von einem Teil des Strangs 51 eine erste Wechselspannung abgegriffen wird, auf die eine zweite Wechselspannung aufmoduliert wird. Das heißt, es erfolgt hier ein Teilabgriff des Strangs 51.

Die dritte und vierte Ausführungsform besitzen den Vorteil, dass aufmodulierte Wechselspannungen nur mit einem Teil des jeweiligen Strangs 51, 49 erzeugt wird. Dies erlaubt optional, die verbleibenden, nicht an der Erzeugung von aufmodulierten Wechselspannungen beteiligten Module 52d, 50d des jeweiligen Stranges so anzusteuern, dass deren Spannungen das jeweils Inverse der aufmodulierten Wechselspannungen erzeugen. An der Erzeugung von aufmodulierten Wechselspannungen können jene Module eines Strangs beteiligt sein, die in dem Teil des Stranges elektrisch zwischen den mindestens zwei Anschlusspunkten eines Transformators 60, 60a, 60b liegen. In diesem beschriebenen Steuerungsfall sind zwischen den Enden der jeweiligen Stränge 51, 49 die aufmodulierten Wechselspannungen nicht oder nur in sehr geringer Amplitude messbar. Folglich sind jegliche derart aufmodulierte Spannungen auch gegenüber der Last 58 eliminiert.

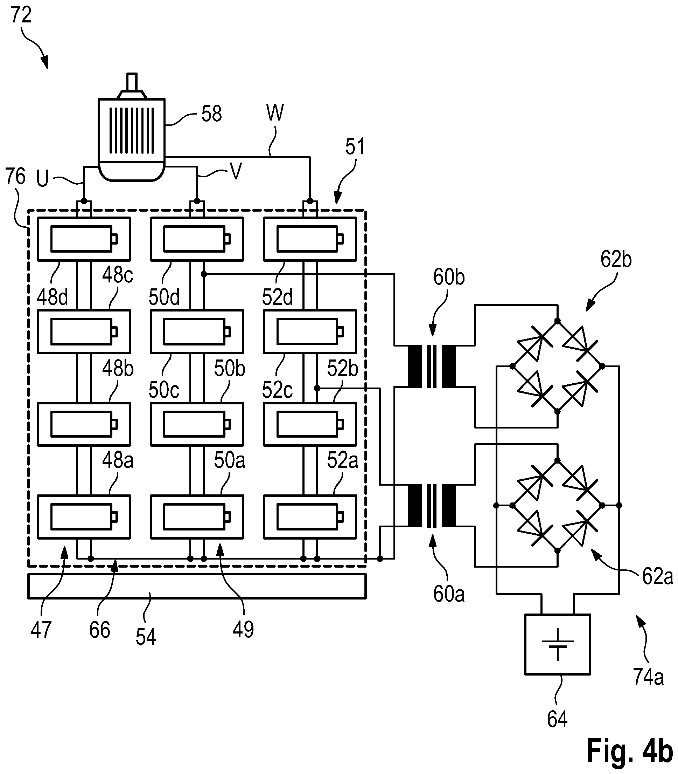

Das in Figur 4b schematisch dargestellte Energieversorgungssystem umfasst ein erstes Teilnetz 72 und ein zweites Teilnetz 74a. Das erste Teilnetz 72 umfasst einen Multilevelkonverters 76, der weitgehend baugleich zu dem Multilevelkonverters 76 aus Figur 4a ausgebildet ist. Beide Teilnetze 42, 44a sind hier über zwei galvanisch trennende Transformatoren 60a, 60b miteinander verbunden. Dabei ist die Primärseite des Transformators 60a dem ersten Teilnetz 42 und die Sekundärseite des Transformators 60a dem zweiten Teilnetz 74a zugeordnet. Die Primärseite des Transformators 60b ist ebenfalls dem ersten Teilnetz 42 und die Sekundärseite des Transformators 60b ist entsprechend ebenfalls dem zweiten Teilnetz 74a zugeordnet. Außerdem ist dem Transformator 60a innerhalb des zweiten Teilnetz 74a ein Gleichrichter 62a nachgeschaltet. Dem Transformator 60b ist innerhalb des zweiten Teilnetzes 74a ein Gleichrichter 62b nachgeschaltet. Die Gleichrichter 62a, 62b sind hier parallel zueinander geschaltet und an einen Energiespeicher 64 angeschlossen. Alternativ dazu ist es auch denkbar, dass die Gleichrichter 62a, 62b in Reihe zueinander geschaltet sind. Die Verschaltung der Gleichrichter 62a, 62b untereinander wird in Abhängigkeit davon vorgesehen, welche Gleichspannung dem Energiespeicher 64 bereitgestellt werden soll bzw. welcher Energiebedarf bei einem oder mehreren hier nicht dargestellten Verbrauchern im zweiten Teilnetz besteht.

Weiterhin ist, wie auch in Figur 4a dargestellt, für den Multilevelkonverter ein Referenzpunkt 66, hier ein Sternpunkt, definiert. Die Primärseite des Transformators 60a ist hier einerseits mit dem Referenzpunkt 66 und andererseits mit einem Anschlusspunkt verbunden, der zwischen dem Einzelmodul 52b und dem Einzelmodul 52c liegt. Demnach erfolgt hier nur ein Teilabgriff des Strangs 51. Die Primärseite des Transformators 60b ist einerseits ebenfalls mit dem Referenzpunkt 66 und andererseits mit einem Anschlusspunkt verbunden, der zwischen dem Einzelmodul 50c und dem Einzelmodul 50d liegt, so dass auch hier nur ein Teilabgriff des Strangs 49 erfolgt.

Demnach wird einerseits von dem dritten Strang 51 über einen Teilabgriff eine erste primäre Wechselspannung abgegriffen, mit einer ersten sekundären Wechselspannung moduliert und als erste resultierende Wechselspannung dem Transformator 60a bzw. der Primärseite des Transformators 60a bereitgestellt. Ferner wird von dem zweiten Strang 49 über einen Teilabgriff eine zweite primäre Wechselspannung abgegriffen, mit einer zweiten sekundären Wechselspannung moduliert und als zweite resultierende Wechselspannung dem Transformator 60b bzw. der Primärseite des Transformators 60b bereitgestellt. Die erste sekundäre Wechselspannung und die zweite sekundäre Wechselspannung sind in der Regel identisch, d. h. die jeweiligen von den Strängen 49 und 51 abgegriffenen primären Wechselspannungen werden in gleicher Weise, d. h. mit einem gleichen in der Regel hochfrequenten Signal moduliert. Die erste resultierende Wechselspannung wird von dem Transformator 60a in eine erste ausgehende Wechselspannung transformiert und durch den Gleichrichter 62a in eine erste Gleichspannung überführt. Die zweite resultierende Wechselspannung wird von dem Transformator 60b in eine zweite ausgehende Wechselspannung transformiert und durch den Gleichrichter 62b in eine zweite Gleichspannung überführt. Durch die hier parallele Verschaltung der Gleichrichter 62a und 62b werden die erste Gleichspannung und die zweite Gleichspannung dem Energiespeicher 64 bereitgestellt.

Ähnlich wie in Figur 3b beschrieben, kann durch eine geeignete jeweilige Modulation der über die beiden Teilabgriffe der Stränge 49 und 51 bereitgestellten ersten Wechselspannungen mit einem gleichen in der Regel hochfrequenten Signal, d. h. einer zweiten Wechselspannung, zumindest eine teilweise Kompensation der Modulation realisiert werden, so dass das hochfrequente Signal bzw. die zweite Wechselspannung für den Verbraucher 58 im Wesentlichen nicht sichtbar ist.

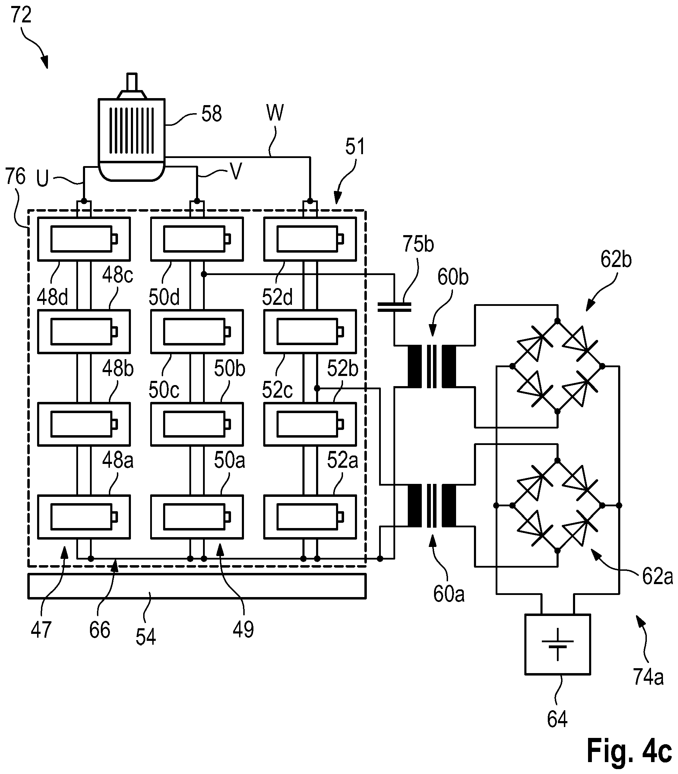

In Figur 4c wird gemäß dem Prinzip von Figur 3c mindestens einem der Transformatoren 60a, 60b mindestens ein Kondensator 75a, 75b elektrisch in Reihe geschaltet.

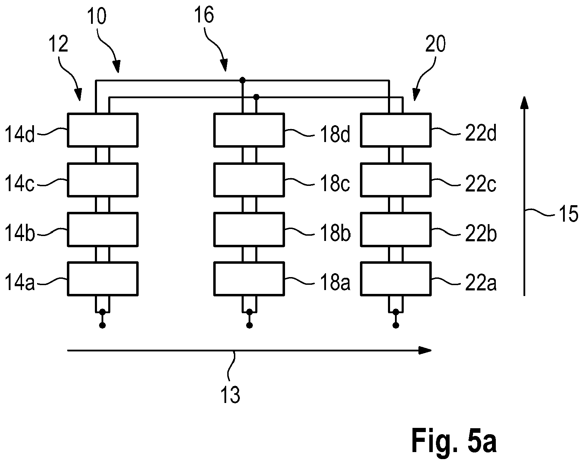

Figur 5a zeigt die aus Figur 2a bekannte erste Ausführungsform des erfindungsgemäßen Multilevelkonverters 10.

Dabei ist in Figur 5a weiterhin ein horizontaler Pfeil 13 gezeigt, entlang dem sich eine Phasen-Phasen-Spannung des Multilevelkonverters 10 ergibt, die hier einem Spanungsunterschied zwischen den Wechselspannungen zwischen jeweils zwei Strängen 12, 16, 20 entspricht. Entlang eines vertikal orientierten Pfeils 15 ergibt sich ein Wert einer jeweiligen ersten bzw. primären Wechselspannung eines jeweiligen Strangs 12, 16, 20, die davon abhängig ist, wie viele Einzelmodule 14a, 14b, 14c, 14d, 18a, 18b, 18c, 18d, 22a, 22b, 22c, 22d eines jeweiligen Strangs 12, 16, 20 zum Bereitstellen der jeweiligen ersten strangspezifischen bzw. phasenspezifischen Wechselspannung aufgrund einer Reihen- und/oder Parallelschaltung der Einzelmodule 14a, 1b, 14c, 14d, 18a, 18b, 18c, 18d, 22a, 22b, 22c, 22d beitragen.

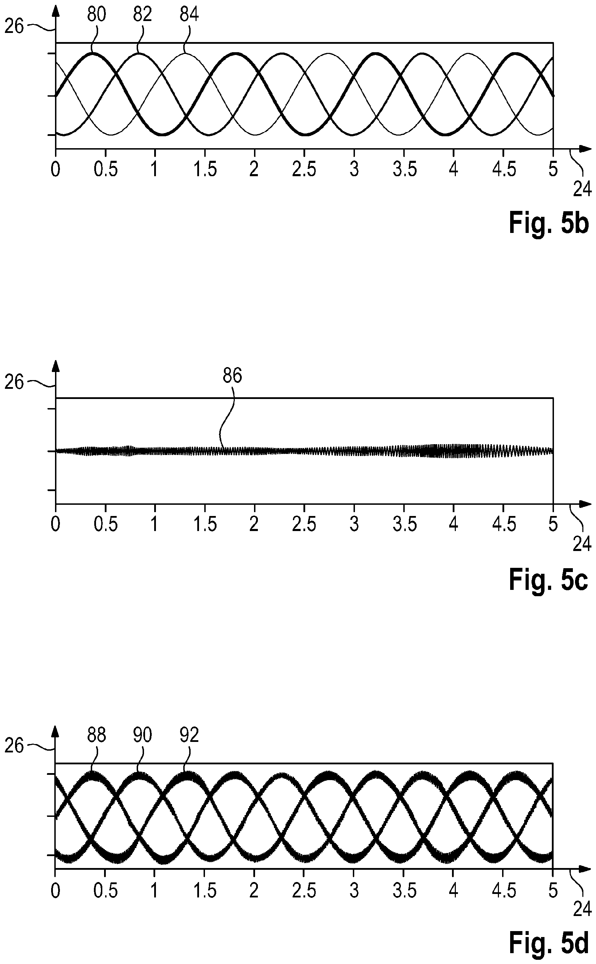

Die Figuren 5b, 5c, 5d umfassen jeweils ein Diagramm mit einer Abszisse 24 entlang der die Zeit aufgetragen ist, und einer Ordinate 26, entlang der Werte einer elektrischen Spannung aufgetragen sind. Hierbei umfasst das erste Diagramm aus Figur 5b einen Verlauf 80 einer ersten primären Wechselspannung bzw. Phase, die durch Schalten, d. h. durch Reihen - und/oder Parallelschalten, der Einzelmodule 14a, 14b, 14c, 14d des ersten Strangs 12 des Multilevelkonverters bereitzustellen ist. Ein zweiter Verlauf 82 stellt eine zweite primäre Wechselspannung bzw. Phase des Multilevelkonverters 10 dar, die über dessen zweiten Strang 16 mit den Einzelmodulen 18a, 18b, 18c, 18d bereitgestellt wird. Ein dritter Verlauf 84 zeigt eine dritte primäre Wechselspannung bzw. Phase, die durch Schalten der Einzelmodule 22a, 22b, 22c, 22d des dritten Strangs 20 des Multilevelkonverters 10 bereitgestellt wird. Dabei weisen diese drei primären und somit ersten Wechselspannungen dieselbe Frequenz und dieselbe Amplitude auf. Außerdem sind diese primären Wechselspannungen um 120° zueinander phasenverschoben.

Das Diagramm aus Figur 5c zeigt einen Verlauf 86 einer zweiten bzw. sekundären Wechselspannung, die wiederum auf die drei primären Wechselspannungen moduliert wird.

Verläufe 88, 90, 92 von daraus resultierenden Spannungen, hier von resultierenden Wechselspannungen, sind in dem Diagramm aus Figur 5d dargestellt.

Auch hier ist vorgesehen, dass der Multilevelkonverter 10 in einem ersten Teilnetz angeordnet ist, das ebenfalls einen dreiphasigen Verbraucher aufweist, dem die drei primären Wechselspannungen bereitgestellt werden. Weiterhin ist dieses Teilnetz über mindestens einen Transformator mit einem zweiten Teilnetz verbunden, wobei ein Wert der Amplitude der Spannung innerhalb des ersten Teilnetzes größer als der Wert der Amplitude der Spannung in dem zweiten Teilnetz ist.

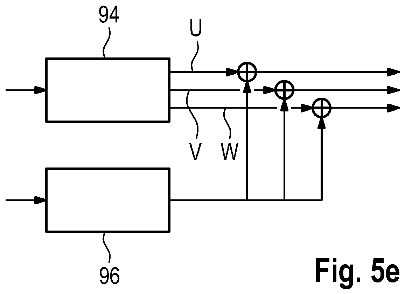

Figur 5e zeigt in schematischer Darstellung eine Steuerung bzw. Maschinenregelung 94 eines Verbrauchers bzw. einer elektrischen Maschine des ersten Teilnetzes, über dessen drei Phasen U, V, W von dem Multilevelkonverter 10 die drei primären Wechselspannungen bereitzustellen sind, deren Verläufe 80, 82, 84, in Figur 5b dargestellt sind. Dabei ist die erste Phase U dem ersten Strang 12, die zweite Phase V dem zweiten Strang 16 und die dritte Phase W dem dritten Strang 20 des Multilevelkonverters 10 zugeordnet. Weiterhin wird von einer Kontrolleinheit 96 des Multilevelkonverters 10 die zweite bzw. sekundäre Wechselspannung, hier ein hochfrequentes Signal mit zeitlich veränderlicher Amplitude und/oder Frequenz bspw. zur Leistungsregelung, erzeugt, deren Verlauf 86 in dem Diagramm aus Figur 5c gezeigt ist. Diese zweite Wechselspannung wird auf die drei ersten Wechselspannungen addiert und dem Verbraucher, hier einer elektrischen Maschine, bereitgestellt.

Somit werden von der Kontrolleinheit 94 bei Durchführung einer Regelung der elektrischen Maschine die ersten phasenspezifischen Wechselspannungen U, V, W bzw. phasenspezifischen Ströme bereitgestellt. (Alternativ ist es möglich, dass diese Kontrolleinheit 94 dem Multilevelkonverter 10 zugeordnet und dazu ausgebildet ist, einen Betrieb der elektrischen Maschine zu überwachen und die Wechselspannungen und/oder Ströme darauf basierend einzustellen.)

Die Kontrolleinheit 96, die u. a. zum Kontrollieren eines Gleichspannungswandlers des Multilevelkonverters 10 ausgebildet ist, erzeugt die hochfrequente zweite Wechselspannung mit zeitlich veränderlicher Amplitude und/oder Frequenz, die bspw. zur Regelung einer Leistung von Verbrauchern des zweiten Teilnetzes vorgesehen ist. Da die zweite Wechselspannung auf alle drei ersten Wechselspannungen bzw. Phasen moduliert wird, ist diese für den Verbraucher bzw. die elektrische Maschine des ersten Teilnetzes nicht sichtbar. Die zweite Wechselspannung entspricht gleichzeitig einer Differenz eines Referenzpunkts des Verbrauchers bzw. der elektrischen Maschine und eines Referenzpunkts des Multilevelkonverters 10, wobei die jeweiligen Referenzpunkte im Falle einer Sternwicklung üblicherweise als Sternpunkte ausgebildet sind.

## Patentansprüche

1. Verfahren zum Betreiben eines elektrischen Netzes (40, 70), das ein erstes Teilnetz (42, 72) und ein zweites Teilnetz (44, 44a, 74, 74a) umfasst, die über mindestens einen Transformator (60, 60a, 60b) miteinander verbunden und durch diesen voneinander galvanisch getrennt werden, wobei eine Primärseite des mindestens einen Transformators (60, 60a, 60b) mit einer ersten Windungszahl dem ersten Teilnetz (42, 72) und eine Sekundärseite des mindestens einen Transformators (60, 60a, 60b) mit einer zweiten Windungszahl dem zweiten Teilnetz (44, 44a, 74, 74a) zugeordnet wird, wobei das erste Teilnetz (42, 72) einen Multilevelkonverter (46, 76) mit einer Mehrzahl an Einzelmodulen (48a, 48b, 48c, 48d, 50a, 50b, 50c, 50d, 52a, 52b, 52c, 52d) aufweist, wobei jedes Einzelmodul (48a, 48b, 48c, 48d, 50a, 50b, 50c, 50d, 52a, 52b, 52c, 52d) einen elektrischen Energiespeicher aufweist, wobei der Multilevelkonverter (46, 76) als zentraler Energiespeicher eines Energieversorgungssystems verwendet wird, wobei von dem Multilevelkonverter (46, 76) mindestens eine erste elektrische Wechselspannung bereitgestellt wird, die mit mindestens einer zweiten elektrischen Wechselspannung moduliert wird, wobei entsprechend mindestens eine daraus resultierende elektrische Wechselspannung dem mindestens einen Transformator (60, 60a, 60b) bereitgestellt wird, die von dem mindestens einen Transformator (60, 60a, 60b) auf entsprechend, mindestens eine ausgehende elektrische Wechselspannung transformiert wird, die dem zweiten Teilnetz (44, 44a, 74, 74a) bereitgestellt wird,
**dadurch gekennzeichnet, dass**
der Multilevelkonverter (46, 76) dazu ausgebildet ist, mindestens zwei Einzelmodule der Mehrzahl an Einzelmodulen (48a, 48b, 48c, 48d, 50a, 50b, 50c, 50d, 52a, 52b, 52c, 52d) in Reihe und/oder zueinander parallel zu schalten, und die mindestens eine erste Wechselspannung aus einer Kombination von Einzelspannungen der mindestens zwei miteinander zu kombinierenden Einzelmodule (48a, 48b, 48c, 48d, 50a, 50b, 50c, 50d, 52a, 52b, 52c, 52d) bereitzustellen, wobei dem Multilevelkonverter (46, 76) mindestens ein zusätzlicher Energiespeicher (56) zugeordnet ist, der dazu ausgebildet ist, die mindestens eine zweite Wechselspannung bereitzustellen, wobei der zusätzliche Energiespeicher (56) außerhalb der Mehrzahl an Einzelmodulen (48a, 48b, 48c, 48d, 50a, 50b, 50c, 50d, 52a, 52b, 52c, 52d) angeordnet ist.

2. Verfahren nach Anspruch 1, bei dem vorgesehen ist, dass die mindestens eine erste Wechselspannung eine Amplitude mit einem ersten Wert und eine Frequenz mit einem ersten Wert aufweist, und dass die mindestens eine zweite Wechselspannung eine Amplitude mit einem zweiten Wert und eine Frequenz mit einem zweiten Wert aufweist, wobei der erste Wert der Amplitude der mindestens einen ersten Wechselspannung größer als der zweite Wert der Amplitude der zweiten Wechselspannung eingestellt wird, und wobei der erste Wert der Frequenz der mindestens einen ersten Wechselspannung kleiner als der zweite Wert der Frequenz der mindestens einen zweiten Wechselspannung eingestellt wird.

3. Verfahren nach einem der voranstehenden Ansprüche, bei dem die mindestens eine erste Wechselspannung zwischen entsprechend mindestens einem Anschluss des Multilevelkonverters, insbesondere einem Anschluss für einen Verbraucher des ersten Teilnetzes, und einem Referenzpunkt (66) des Multilevelkonverters (10, 47, 76) mit der mindestens einen zweiten Wechselspannung moduliert wird.

4. Verfahren nach einem der voranstehenden Ansprüche, bei dem die mindestens eine zweite Wechselspannung auf die mindestens eine erste Wechselspannung moduliert wird, wobei die entsprechend mindestens eine resultierende Wechselspannung als Summe der mindestens einen ersten Wechselspannung und der mindestens einen zweiten Wechselspannung bereitgestellt wird.

5. Verfahren nach einem der voranstehenden Ansprüche, bei dem von dem Multilevelkonverter (46, 76) mehrere zueinander phasenverschobene erste Wechselspannungen bereitgestellt werden, die jeweils mit der mindestens einen zweiten Wechselspannung zu entsprechend mehreren resultierenden Wechselspannungen moduliert werden.

6. Verfahren nach Anspruch 5, bei dem eine jeweilige der mehreren zueinander phasenverschobenen ersten Wechselspannungen durch einen Vollabgriff und/oder einen Teilabgriff von einem jeweiligen durch eine Kombination aus mehreren miteinander verschalteten Einzelmodulen gebildeten Strang in Bezug zu einem Referenzpunkt bereitgestellt und jeweils mit der mindestens einen zweiten Wechselspannung moduliert wird.

7. Verfahren nach Anspruch 5 oder 6, bei dem eine jeweilige der mehreren ersten Wechselspannungen zwischen einem jeweiligen Phasenanschluss des Multilevelkonverters für einen Verbraucher des ersten Teilnetzes und dem Referenzpunkt (66) des Multilevelkonverters (10, 47, 76) mit der mindestens einen zweiten Wechselspannung moduliert wird.

8. Verfahren nach Anspruch 3 oder 7, bei dem als Referenzpunkt (66) ein Sternpunkt des Multilevelkonverters (46, 76) gewählt wird.

9. Verfahren nach Anspruch 5 bis 8, bei dem eine jeweilige resultierende Wechselspannung der mehreren resultierenden Wechselspannungen einem jeweiligen Transformator (60, 60a, 60b) von entsprechend mehreren Transformatoren (60, 60a, 60b) bereitgestellt wird, der die jeweilige resultierende Wechselspannung in eine jeweilige ausgehende Wechselspannung transformiert.

10. Verfahren nach Anspruch 9, bei dem eine jeweilige ausgehende Wechselspannung der entsprechend mehreren ausgehenden Wechselspannungen über einen jeweiligen Gleichrichter (62, 62a, 62b) von entsprechend mehreren Gleichrichtern (62, 62a, 62b) in eine jeweilige ausgehende Gleichspannung überführt wird, wobei die jeweiligen ausgehenden Gleichspannungen durch eine Verschaltung der mehreren Gleichrichter (62, 90 62a, 62b) untereinander in eine Gesamtspannung überführt werden.

11. Multilevelkonverter der in einem elektrischen Netz (40, 70) anzuordnen ist, wobei das elektrische Netz (40, 70) ein erstes Teilnetz (42, 72) und ein zweites Teilnetz (44, 44a, 74, 74a) umfasst, wobei die beiden Teilnetze (42, 44, 72, 74) über mindestens einen Transformator (60, 60a, 60b) miteinander zu verbinden und durch diesen voneinander galvanisch zu trennen sind, wobei eine Primärseite des mindestens einen Transformators (60, 60a, 60b) mit einer ersten Windungszahl dem ersten Teilnetz (42, 72) und eine Sekundärseite des mindestens einen Transformators (60, 60a, 60b) mit einer zweiten Windungszahl dem zweiten Teilnetz (44, 44a, 74, 74a) zuzuordnen ist, wobei der Multilevelkonverter (46, 76) in dem ersten Teilnetz (42, 72) anzuordnen ist und eine Mehrzahl an Einzelmodulen (48a, 48b, 48c, 48d, 50a, 50b, 50c, 50d, 52a, 52b, 52c, 52d) aufweist, wobei jedes Einzelmodul (48a, 48b, 48c, 48d, 50a, 50b, 50c, 50d, 52a, 52b, 52c, 52d) einen elektrischen Energiespeicher aufweist, wobei der Multilevelkonverter (46, 76) als zentraler Energiespeicher eines Energieversorgungssystems verwendet wird, wobei der Multilevelkonverter (46, 76) dazu ausgebildet ist, mindestens eine erste elektrische Wechselspannung bereitzustellen und mit mindestens einer zweiten elektrischen Wechselspannung zu modulieren, wobei entsprechend mindestens eine daraus resultierende elektrische Wechselspannung dem mindestens einen Transformator (60, 60a, 60b) bereitzustellen ist, die von dem mindestens einen Transformator (60, 60a, 60b) auf entsprechend mindestens eine ausgehende elektrische Wechselspannung zu transformieren und dem zweiten Teilnetz (44, 44a, 74, 74a) bereitzustellen ist,
**dadurch gekennzeichnet, dass**
der Multilevelkonverter (46, 76) dazu ausgebildet ist, mindestens zwei Einzelmodule der Mehrzahl an Einzelmodulen (48a, 48b, 48c, 48d, 50a, 50b, 50c, 50d, 52a, 52b, 52c, 52d) in Reihe und/oder zueinander parallel zu schalten, und die mindestens eine erste Wechselspannung aus einer Kombination von Einzelspannungen der mindestens zwei miteinander zu kombinierenden Einzelmodule (48a, 48b, 48c, 48d, 50a, 50b, 50c, 50d, 52a, 52b, 52c, 52d) bereitzustellen, dem Multilevelkonverter (46, 76) mindestens ein zusätzlicher Energiespeicher (56) zugeordnet ist, der dazu ausgebildet ist, die mindestens eine zweite Wechselspannung bereitzustellen, wobei der zusätzliche Energiespeicher (56) außerhalb der Mehrzahl an Einzelmodulen (48a, 48b, 48c, 48d, 50a, 50b, 50c, 50d, 52a, 52b, 52c, 52d) angeordnet ist.

12. Multilevelkonverter nach Anspruch 11, dem eine Kontrolleinheit (54) zugeordnet ist, die dazu ausgebildet ist, Werte von mindestens einem physikalischen Parameter der mindestens einen ersten Wechselspannung und/oder der mindestens einen zweiten Wechselspannung einzustellen.

13. Multilevelkonverter nach Anspruch 11 oder 12, der mehrere Stränge (12, 16, 20, 47, 49, 51) aufweist, wobei jeder Strang (12, 16, 20, 47, 49, 51) eine Kombination aus mehreren miteinander verschalteten Einzelmodulen 48a, 48b, 48c, 48d, 50a, 50b, 50c, 50d, 52a, 52b, 52c, 52d) aufweist, wobei mit jedem Strang (12, 16; 20, 47, 49, 51) jeweils eine erste Wechselspannung zu erzeugen ist.

14. Multilevelkonverter nach Anspruch 13, der dazu ausgebildet ist, die mindestens eine erste elektrische Wechselspannung durch einen Vollabgriff von entsprechend mindestens einem Strang (47, 49, 51) und/oder durch einen Teilabgriff von entsprechend mindestens einem Strang (47, 49, 51) in Bezug zu einem Referenzpunkt (66) des Multilevelkonverters bereitzustellen und mit der mindestens einen zweiten elektrischen Wechselspannung zu modulieren.

15. Multilevelkonverter nach Anspruch, 13 oder 14, der dazu ausgebildet ist, durch die mehreren Stränge (47, 49, 51) mehrere zueinander phasenverschobene erste Wechselspannungen bereitzustellen und jeweils mit der mindestens einen zweiten Wechselspannung zu entsprechend mehreren resultierenden Wechselspannungen zu modulieren.

16. Multilevelkonverter nach Anspruch 15, der dazu ausgebildet ist, eine jeweilige der mehreren ersten Wechselspannungen zwischen einem jeweiligen Phasenanschluss des Multilevelkonverters für einen Verbraucher des ersten Teilnetzes und dem Referenzpunkt (66) des Multilevelkonverters (10, 47, 76) mit der mindestens einen zweiten Wechselspannung zu modulieren.

17. Multilevelkonverter nach Anspruch 13 oder 16, bei dem der Referenzpunkt (66) einem Sternpunkt des Multilevelkonverters (46, 76) entspricht.

18. Multilevelkonverter nach Anspruch 15 bis 17, der dazu ausgebildet ist, eine jeweilige resultierende Wechselspannung der mehreren resultierenden Wechselspannungen einem jeweiligen Transformator (60, 60a, 60b) von entsprechend mehreren Transformatoren (60, 60a, 60b) bereitzustellen, der die jeweilige resultierende Wechselspannung in eine jeweilige ausgehende Wechselspannung transformiert.

19. Multilevelkonverter nach einem der Ansprüche 11 bis 18, bei dem Energiespeicher der Einzelmodule (48a, 48b, 48c, 48d, 50a, 50b, 50c, 50d, 52a, 52b, 52c, 52d) als Gleichspannungsquellen ausgebildet sind, wobei der Multilevelkonverter (46, 76) mindestens einen Wandler aufweist, der dazu ausgebildet ist, eine als Gleichspannung ausgebildete Einzelspannung eines Energiespeichers mindestens eines Einzelmoduls (48a, 48b, 48c, 48d, 50ä, 50b, 50c, 50d, 52a, 52b, 52c, 52d) in eine Wechselspannung umzuwandeln und daraus die mindestens eine erste Wechselspannung bereitzustellen.

20. Energieversorgungssystem, das ein elektrisches Netz (40, 70) aufweist, das ein erstes Teilnetz (42, 72) und ein zweites Teilnetz (44, 44a, 74, 74a) umfasst, die über mindestens einen Transformator (60, 60a, 60b) miteinander verbunden und durch diesen voneinander galvanisch getrennt sind, wobei eine Primärseite des mindestens einen Transformators (60, 60a, 60b) mit einer ersten Windungszahl dem ersten Teilnetz (42, 72) und eine Sekundärseite des mindestens einen Transformators (60, 60a, 60b) mit einer zweiten Windungszahl dem zweiten Teilnetz (44, 44a, 74, 74a) zugeordnet ist, wobei das erste Teilnetz (42, 72) einen Multilevelkönverter (46, 76) mit einer Mehrzahl an Einzelmodulen (48a, 48b, 48c, 48d, 50a, 50b, 50c, 50d, 52a, 52b, 52c, 52d) aufweist, wobei jedes Einzelmodul (48a, 48b, 48c, 48d, 50a, 50b, 50c, 50d, 52a, 52b, 52c, 52d) einen elektrischen Energiespeicher aufweist, wobei der Multilevelkonverter (46, 76) als zentraler Energiespeicher eines Energieversorgungssystems verwendet wird, wobei der Multilevelkonverter (46, 76) dazu ausgebildet ist, mindestens eine erste elektrische Wechselspannung bereitzustellen und mit mindestens einer zweiten elektrischen Wechselspannung zu modulieren, wobei entsprechend mindestens eine daraus resultierende elektrische Wechselspannung dem mindestens einen Transformator (60, 60a, 60b) bereitzustellen ist, wobei der mindestens eine Transformator (60, 60a, 60b) dazu ausgebildet ist, die entsprechend mindestens eine resultierende elektrische Wechselspannung auf entsprechend mindestens eine ausgehende elektrische Wechselspannung zu transformieren und dem zweiten Teilnetz (44, 44a, 74, 74a) bereitzustellen,
**dadurch gekennzeichnet, dass**
der Multilevelkonverter (46, 76) dazu ausgebildet ist, mindestens zwei Einzelmodule der Mehrzahl an Einzelmodulen (48a, 48b, 48c, 48d, 50a, 50b, 50c, 50d, 52a, 52b, 52c, 52d) in Reihe und/oder zueinander parallel zu schalten, und die mindestens eine erste Wechselspannung aus einer Kombination von Einzelspannungen der mindestens zwei miteinander zu kombinierenden Einzelmodule (48a, 48b, 48c, 48d, 50a, 50b, 50c, 50d, 52a, 52b, 52c, 52d) bereitzustellen, wobei dem Multilevelkonverter (46, 76) mindestens ein zusätzlicher Energiespeicher (56) zugeordnet ist, der dazu ausgebildet ist, die mindestens eine zweite Wechselspannung bereitzustellen, wobei der zusätzliche Energiespeicher (56) außerhalb der Mehrzahl an Einzelmodulen (48a, 48b, 48c, 48d, 50a, 50b, 50c, 50d, 52a, 52b, 52c, 52d) angeordnet ist.

21. Energieversorgungssystem nach Anspruch 20, bei dem die erste Windungszahl der Primärseite des Transformators (60, 60a, 60b) größer als die zweite Windungszahl der Sekundärseite des Transformators (60, 60a, 60b) ist.

22. Energieversorgungssystem nach Anspruch 20 oder 21, das in einem Kraftfahrzeug anzuordnen ist und bei dem dem ersten Teilnetz (42, 72) als Verbraucher (58) eine elektrische Maschine zuzuordnen ist.

23. Energieversorgungssystem nach einem der Ansprüche 20 bis 22, das ferner mindestens einen Gleichrichter (62, 62a, 62b) umfasst, der dazu ausgebildet ist, die mindestens eine ausgehende elektrische Wechselspannung in entsprechend mindestens eine Gleichspannung zu überführen.

24. Energieversorgungssystem nach einem der Ansprüche 20 bis 22, das dazu ausgebildet ist, mehrere erste Wechselspannungen bereitzustellen und diese mehreren ersten Wechselspannungen jeweils mit mindestens einer zweiten Wechselspannung zu entsprechend mehreren resultieren Wechselspannungen zu modulieren, wobei das Energieversorgungssystem entsprechend mehrere Transformatoren (60, 60a, 60b) umfasst, wobei jeweils ein Transformator (60, 60a, 60b) dazu ausgebildet ist, jeweils eine der mehreren resultierenden Wechselspannungen in jeweils eine ausgehende Wechselspannung zu transformieren, und wobei das Energieversorgungssystem ferner entsprechend mehrere Gleichrichter (62, 62a, 62b) umfasst, die den mehreren Transformatoren (60, 60a; 60b) nachgeschaltet sind, wobei ein jeweiliger Gleichrichter (62, 62a, 62b) dazu ausgebildet ist, eine jeweilige ausgehende Wechselspannung eines jeweiligen Transformators (60, 60a, 60b) in eine jeweilige Gleichspannung zu überführen, wobei die mehreren Gleichrichter (62, 62a, 62b) untereinander so verschaltet sind, dass darüber die jeweiligen Gleichspannungen in eine Gesamtspannung überführbar sind.

## Claims

1. Method for operating an electrical network (40, 70) comprising a first subnetwork (42, 72) and a second subnetwork (44, 44a, 74, 74a) that are connected to one another via at least one transformer (60, 60a, 60b) and are DC isolated from one another by said transformer, wherein a primary side of the at least one transformer (60, 60a, 60b) having a first number of turns is assigned to the first subnetwork (42, 72) and a secondary side of the at least one transformer (60, 60a, 60b) having a second number of turns is assigned to the second subnetwork (44, 44a, 74, 74a), wherein the first subnetwork (42, 72) has a multilevel converter (46, 76) having a plurality of single modules (48a, 48b, 48c, 48d, 50a, 50b, 50c, 50d, 52a, 52b, 52c, 52d), wherein each single module (48a, 48b, 48c, 48d, 50a, 50b, 50c, 50d, 52a, 52b, 52c, 52d) has an electrical energy store, wherein the multilevel converter (46, 76) is used as a central energy store of a power supply system, wherein the multilevel converter (46, 76) provides at least one first AC voltage that is modulated with at least one second AC voltage, wherein accordingly at least one AC voltage resulting therefrom is provided to the at least one transformer (60, 60a, 60b) and is transformed by the at least one transformer (60, 60a, 60b) to accordingly at least one outgoing AC voltage that is provided to the second subnetwork (44, 44a, 74, 74a),
**characterized in that**
the multilevel converter (46, 76) is configured to connect at least two single modules from the plurality of single modules (48a, 48b, 48c, 48d, 50a, 50b, 50c, 50d, 52a, 52b, 52c, 52d) in series and/or in parallel with one another, and to provide the at least one first AC voltage from a combination of single voltages of the at least two single modules (48a, 48b, 48c, 48d, 50a, 50b, 50c, 50d, 52a, 52b, 52c, 52d) to be combined with one another, wherein the multilevel converter (46, 76) has at least one associated additional energy store (56) configured to provide the at least one second AC voltage, wherein the additional energy store (56) is arranged outside the plurality of single modules (48a, 48b, 48c, 48d, 50a, 50b, 50c, 50d, 52a, 52b, 52c, 52d).

2. Method according to Claim 1, in which there is provision for the at least one first AC voltage to have an amplitude having a first value and a frequency having a first value, and for the at least one second AC voltage to have an amplitude having a second value and a frequency having a second value, wherein the first value of the amplitude of the at least one first AC voltage is set so as to be greater than the second value of the amplitude of the second AC voltage, and wherein the first value of the frequency of the at least one first AC voltage is set so as to be less than the second value of the frequency of the at least one second AC voltage.

3. Method according to either of the preceding claims, in which the at least one first AC voltage is modulated with the at least one second AC voltage between accordingly at least one connection of the multilevel converter, in particular a connection for a load in the first subnetwork, and a reference point (66) of the multilevel converter (10, 46, 76).

4. Method according to one of the preceding claims, in which the at least one second AC voltage is modulated onto the at least one first AC voltage, wherein the accordingly at least one resultant AC voltage is provided as the sum of the at least one first AC voltage and the at least one second AC voltage.

5. Method according to one of the preceding claims, in which the multilevel converter (46, 76) provides multiple first AC voltages phase shifted relative to one another that are each modulated with the at least one second AC voltage to produce accordingly multiple resultant AC voltages.

6. Method according to Claim 5, in which a respective instance of the multiple first AC voltages phase shifted relative to one another is provided by means of a full tap and/or a partial tap from a respective section formed by a combination of multiple interconnected single modules with reference to a reference point and is modulated in each case with the at least one second AC voltage.

7. Method according to Claim 5 or 6, in which a respective instance of the multiple first AC voltages is modulated with the at least one second AC voltage between a respective phase connection of the multilevel converter for a load in the first subnetwork and the reference point (66) of the multilevel converter (10, 46, 76) .

8. Method according to Claim 3 or 7, in which the reference point (66) chosen is a star point of the multilevel converter (46, 76).

9. Method according to Claims 5 to 8, in which a respective resultant AC voltage from the multiple resultant AC voltages is provided to a respective transformer (60, 60a, 60b) from accordingly multiple transformers (60, 60a, 60b), which transforms the respective resultant AC voltage into a respective outgoing AC voltage.

10. Method according to Claim 9, in which a respective outgoing AC voltage from the accordingly multiple outgoing AC voltages is converted into a respective outgoing DC voltage via a respective rectifier (62, 62a, 62b) from accordingly multiple rectifiers (62, 62a, 62b), wherein the respective outgoing DC voltages are converted into a total voltage by interconnecting the multiple rectifiers (62, 62a, 62b) among one another.

11. Multilevel converter able to be arranged in an electrical network (40, 70), wherein the electrical network (40, 70) comprises a first subnetwork (42, 72) and a second subnetwork (44, 44a, 74, 74a), wherein the two subnetworks (42, 44, 72, 74) are able to be connected to one another via at least one transformer (60, 60a, 60b) and are able to be DC isolated from one another by said transformer, wherein a primary side of the at least one transformer (60, 60a, 60b) having a first number of turns is able to be assigned to the first subnetwork (42, 72) and a secondary side of the at least one transformer (60, 60a, 60b) having a second number of turns is able to be assigned to the second subnetwork (44, 44a, 74, 74a), wherein the multilevel converter (46, 76) is able to be arranged in the first subnetwork (42, 72) and has a plurality of single modules (48a, 48b, 48c, 48d, 50a, 50b, 50c, 50d, 52a, 52b, 52c, 52d), wherein each single module (48a, 48b, 48c, 48d, 50a, 50b, 50c, 50d, 52a, 52b, 52c, 52d) has an electrical energy store, wherein the multilevel converter (46, 76) is used as a central energy store of a power supply system, wherein the multilevel converter (46, 76) is configured to provide at least one first AC voltage and to modulate it with at least one second AC voltage, wherein accordingly at least one AC voltage resulting therefrom is able to be provided to the at least one transformer (60, 60a, 60b) and is able to be transformed by the at least one transformer (60, 60a, 60b) into accordingly at least one outgoing AC voltage and is able to be provided to the second subnetwork (44, 44a, 74, 74a),
**characterized in that**
the multilevel converter (46, 76) is configured to connect at least two single modules from the plurality of single modules (48a, 48b, 48c, 48d, 50a, 50b, 50c, 50d, 52a, 52b, 52c, 52d) in series and/or in parallel with one another, and to provide the at least one first AC voltage from a combination of single voltages of the at least two single modules (48a, 48b, 48c, 48d, 50a, 50b, 50c, 50d, 52a, 52b, 52c, 52d) to be combined with one another, the multilevel converter (46, 76) has at least one associated additional energy store (56) configured to provide the at least one second AC voltage, wherein the additional energy store (56) is arranged outside the plurality of single modules (48a, 48b, 48c, 48d, 50a, 50b, 50c, 50d, 52a, 52b, 52c, 52d).

12. Multilevel converter according to Claim 11, which has an associated control unit (54) configured to set values of at least one physical parameter of the at least one first AC voltage and/or of the at least one second AC voltage.

13. Multilevel converter according to Claim 11 or 12, which has multiple sections (12, 16, 20, 47, 49, 51), wherein each section (12, 16, 20, 47, 49, 51) has a combination of multiple interconnected single modules (48a, 48b, 48c, 48d, 50a, 50b, 50c, 50d, 52a, 52b, 52c, 52d), wherein each section (12, 16, 20, 47, 49, 51) is able to be used to produce a respective first AC voltage.

14. Multilevel converter according to Claim 13, which is configured to provide the at least one first AC voltage by means of a full tap from accordingly at least one section (47, 49, 51) and/or by means of a partial tap from accordingly at least one section (47, 49, 51) with reference to a reference point (66) of the multilevel converter and to modulate it with the at least one second AC voltage.

15. Multilevel converter according to Claim 13 or 14, which is configured to use the multiple sections (47, 49, 51) to provide multiple first AC voltages phase shifted relative to one another and to modulate each of them with the at least one second AC voltage to produce accordingly multiple resultant AC voltages.

16. Multilevel converter according to Claim 15, which is configured to modulate a respective instance of the multiple first AC voltages with the at least one second AC voltage between a respective phase connection of the multilevel converter for a load in the first subnetwork and the reference point (66) of the multilevel converter (10, 47, 76).

17. Multilevel converter according to Claim 13 or 16, in which the reference point (66) is consistent with a star point of the multilevel converter (46, 76).

18. Multilevel converter according to Claims 15 to 17, which is configured to provide a respective resultant AC voltage from the multiple resultant AC voltages to a respective transformer (60, 60a, 60b) from accordingly multiple transformers (60, 60a, 60b), which transforms the respective resultant AC voltage into a respective outgoing AC voltage.

19. Multilevel converter according to one of Claims 11 to 18, in which energy stores of the single modules (48a, 48b, 48c, 48d, 50a, 50b, 50c, 50d, 52a, 52b, 52c, 52d) are configured as DC voltage sources, wherein the multilevel converter (46, 76) has at least one converter that is configured to convert a single voltage, configured as a DC voltage, of an energy store of at least one single module (48a, 48b, 48c, 48d, 50a, 50b, 50c, 50d, 52a, 52b, 52c, 52d) into an AC voltage and to provide the at least one first AC voltage therefrom.

20. Power supply system that has an electrical network (40, 70) comprising a first subnetwork (42, 72) and a second subnetwork (44, 44a, 74, 74a) that are connected to one another via at least one transformer (60, 60a, 60b) and are DC isolated from one another by said transformer, wherein a primary side of the at least one transformer (60, 60a, 60b) having a first number of turns is assigned to the first subnetwork (42, 72) and a secondary side of the at least one transformer (60, 60a, 60b) having a second number of turns is assigned to the second subnetwork (44, 44a, 74, 74a), wherein the first subnetwork (42, 72) has a multilevel converter (46, 76) having a plurality of single modules (48a, 48b, 48c, 48d, 50a, 50b, 50c, 50d, 52a, 52b, 52c, 52d), wherein each single module (48a, 48b, 48c, 48d, 50a, 50b, 50c, 50d, 52a, 52b, 52c, 52d) has an electrical energy store, wherein the multilevel converter (46, 76) is used as a central energy store of a power supply system, wherein the multilevel converter (46, 76) is configured to provide at least one first AC voltage and to modulate it with at least one second AC voltage, wherein accordingly at least one AC voltage resulting therefrom is able to be provided to the at least one transformer (60, 60a, 60b), wherein the at least one transformer (60, 60a, 60b) is configured to transform the accordingly at least one resultant AC voltage into accordingly at least one outgoing AC voltage and to provide it to the second subnetwork (44, 44a, 74, 74a),
**characterized in that**
the multilevel converter (46, 76) is configured to connect at least two single modules from the plurality of single modules (48a, 48b, 48c, 48d, 50a, 50b, 50c, 50d, 52a, 52b, 52c, 52d) in series and/or in parallel with one another, and to provide the at least one first AC voltage from a combination of single voltages of the at least two single modules (48a, 48b, 48c, 48d, 50a, 50b, 50c, 50d, 52a, 52b, 52c, 52d) to be combined with one another, wherein the multilevel converter (46, 76) has at least one associated additional energy store (56) configured to provide the at least one second AC voltage, wherein the additional energy store (56) is arranged outside the plurality of single modules (48a, 48b, 48c, 48d, 50a, 50b, 50c, 50d, 52a, 52b, 52c, 52d).

21. Power supply system according to Claim 20, in which the first number of turns on the primary side of the transformer (60, 60a, 60b) is greater than the second number of turns on the secondary side of the transformer (60, 60a, 60b).

22. Power supply system according to Claim 20 or 21, which is able to be arranged in a motor vehicle and in which an electrical machine is able to be assigned to the first subnetwork (42, 72) as a load (58).

23. Power supply system according to one of Claims 20 to 22, which further comprises at least one rectifier (62, 62a, 62b) that is configured to convert the at least one outgoing AC voltage into accordingly at least one DC voltage.

24. Power supply system according to one of Claims 20 to 22, which is configured to provide multiple first AC voltages and to modulate each of these multiple first AC voltages with at least one second AC voltage to produce accordingly multiple resultant AC voltages, wherein the power supply system comprises accordingly multiple transformers (60, 60a, 60b), wherein a respective transformer (60, 60a, 60b) is configured to transform a respective one of the multiple resultant AC voltages into a respective outgoing AC voltage, and wherein the power supply system further comprises accordingly multiple rectifiers (62, 62a, 62b) connected downstream of the multiple transformers (60, 60a, 60b), wherein a respective rectifier (62, 62a, 62b) is configured to convert a respective outgoing AC voltage from a respective transformer (60, 60a, 60b) into a respective DC voltage, wherein the multiple rectifiers (62, 62a, 62b) are interconnected among one another such that they can be used to convert the respective DC voltages into a total voltage.

## Revendications

1. Procédé d'exploitation d'un réseau électrique (40, 70) comprenant un premier sous-réseau (42, 72) et un deuxième sous-réseau (44, 44a, 74, 74a) qui sont interconnectés par au moins un transformateur (60, 60a, 60b) et qui sont isolés galvaniquement l'un de l'autre par celui-ci, dans lequel un côté primaire de l'au moins un transformateur (60, 60a, 60b) ayant un premier nombre d'enroulements est associé au premier sous-réseau (42, 72) et un côté secondaire de l'au moins un transformateur (60, 60a, 60b) ayant un deuxième nombre d'enroulements est associé au deuxième sous-réseau (44, 44a, 74, 74a), dans lequel le premier sous-réseau (42, 72) présente un convertisseur à plusieurs niveaux (46, 76) doté d'une pluralité de modules individuels (48a, 48b, 48c, 48d, 50a, 50b, 50c, 50d, 52a, 52b, 52c, 52d), chaque module individuel (48a, 48b, 48c, 48d, 50a, 50b, 50c, 50d, 52a, 52b, 52c, 52d) présentant un accumulateur d'énergie électrique, le convertisseur à plusieurs niveaux (46, 76) étant utilisé comme un accumulateur d'énergie central d'un système d'alimentation en énergie, le convertisseur à plusieurs niveaux (46, 76) fournissant au moins une première tension alternative électrique qui est modulée par au moins une deuxième tension alternative électrique, dans lequel, de manière correspondante, au moins une tension alternative électrique qui en résulte est fournie audit au moins un transformateur (60, 60a, 60b) et est transformée par ledit au moins un transformateur (60, 60a, 60b) de manière correspondante en au moins une tension électrique alternative sortante qui est fournie au deuxième sous-réseau (44, 44a, 74, 74a),
**caractérisé en ce que** le convertisseur à plusieurs niveaux (46, 76) est réalisé pour connecter en série et/ou en parallèle les uns aux autres au moins deux modules individuels de la pluralité de modules individuels (48a, 48b, 48c, 48d, 50a, 50b, 50c, 50d, 52a, 52b, 52c, 52d), et pour fournir ladite au moins une tension alternative à partir d'une combinaison de tensions individuelles des au moins deux modules individuels (48a, 48b, 48c, 48d, 50a, 50b, 50c, 50d, 52a, 52b, 52c, 52d) à combiner ensemble, dans lequel le convertisseur à plusieurs niveaux (46, 76) est associé au moins à un accumulateur d'énergie supplémentaire (56) qui est réalisé pour fournir ladite au moins une deuxième tension alternative, l'accumulateur d'énergie supplémentaire (56) étant disposé en dehors de la pluralité de modules individuels (48a, 48b, 48c, 48d, 50a, 50b, 50c, 50d, 52a, 52b, 52c, 52d).

2. Procédé selon la revendication 1, dans lequel il est prévu que ladite au moins une première tension alternative présente une amplitude d'une première valeur et une fréquence d'une première valeur, et que ladite au moins une deuxième tension alternative présente une amplitude d'une deuxième valeur et une fréquence d'une deuxième valeur, la première valeur de l'amplitude de ladite au moins une première tension alternative étant réglée pour être supérieure à la deuxième valeur de l'amplitude de la deuxième tension alternative, et la première valeur de la fréquence de ladite au moins une première tension alternative étant réglée pour être inférieure à la deuxième valeur de la fréquence de ladite au moins une deuxième tension alternative.

3. Procédé selon l'une quelconque des revendications précédentes, dans lequel ladite au moins une première tension alternative est modulée de manière correspondante entre au moins une borne du convertisseur à plusieurs niveaux, en particulier une borne pour un consommateur du premier sous-réseau, et un point de référence (66) du convertisseur à plusieurs niveaux (10, 46, 76) avec ladite au moins une deuxième tension alternative.

4. Procédé selon l'une quelconque des revendications précédentes, dans lequel ladite au moins une deuxième tension alternative est modulée sur ladite au moins une première tension alternative, ladite au moins une tension alternative résultante de manière correspondante étant fournie sous la forme d'une somme de ladite au moins une première tension alternative et de ladite au moins une deuxième tension alternative.

5. Procédé selon l'une quelconque des revendications précédentes, dans lequel le convertisseur à plusieurs niveaux (46, 76) fournit plusieurs premières tensions alternatives décalées en phase les unes par rapport aux autres qui sont respectivement modulées avec ladite au moins une deuxième tension alternative en plusieurs tensions alternatives résultantes de manière correspondante.

6. Procédé selon la revendication 5, dans lequel une tension alternative respective des plusieurs premières tensions alternatives décalées en phase les unes par rapport aux autres est fournie par une prise complète et/ou une prise partielle sur une branche respective formée par une combinaison de plusieurs modules individuels interconnectés par rapport à un point de référence et est modulée avec ladite au moins une deuxième tension alternative, respectivement.

7. Procédé selon la revendication 5 ou 6, dans lequel une tension alternative respective des plusieurs premières tensions alternatives est modulée entre une borne de phase respective du convertisseur à plusieurs niveaux pour un consommateur du premier sous-réseau et le point de référence (66) du convertisseur à plusieurs niveaux (10, 46, 76) avec ladite au moins une deuxième tension alternative.

8. Procédé selon la revendication 3 ou 7, dans lequel un point neutre du convertisseur à plusieurs niveaux (46, 76) est sélectionné comme point de référence (66).

9. Procédé selon la revendication 5 à 8, dans lequel une tension alternative résultante respective des plusieurs tensions alternatives résultantes est fournie à un transformateur respectif (60, 60a, 60b) parmi plusieurs transformateurs (60, 60a, 60b) de manière correspondante, qui transforme la tension alternative résultante respective en une tension alternative sortante respective.

10. Procédé selon la revendication 9, dans lequel une tension alternative sortante respective des plusieurs tensions alternatives sortantes de manière correspondante est transformée par l'intermédiaire d'un redresseur respectif (62, 62a, 62b) parmi plusieurs redresseurs (62, 62a, 62b) de manière correspondante en une tension continue sortante respective, les tensions continues sortantes respectives étant transformées en une tension globale par une interconnexion de plusieurs redresseurs (62, 62a, 62b).

11. Convertisseur à plusieurs niveaux à disposer dans un réseau électrique (40, 70), le réseau électrique (40, 70) comprenant un premier sous-réseau (42, 72) et un deuxième sous-réseau (44, 44a, 74, 74a), les deux sous-réseaux (42, 44, 72, 74) étant à relier l'un à l'autre par au moins un transformateur (60, 60a, 60b) et étant à séparer galvaniquement l'un de l'autre par celui-ci, dans lequel un côté primaire de l'au moins un transformateur (60, 60a, 60b) ayant un premier nombre d'enroulements est à associer au premier sous-réseau (42, 72) et un côté secondaire de l'au moins un transformateur (60, 60a, 60b) ayant un deuxième nombre d'enroulements est à associer au deuxième sous-réseau (44, 44a, 74, 74a), le convertisseur à plusieurs niveaux (46, 76) étant à disposer dans le premier sous-réseau (42, 72) et présentant une pluralité de modules individuels (48a, 48b, 48c, 48d, 50a, 50b, 50c, 50d, 52a, 52b, 52c, 52d), chaque module individuel (48a, 48b, 48c, 48d, 50a, 50b, 50c, 50d, 52a, 52b, 52c, 52d) présentant un accumulateur d'énergie électrique, dans lequel le convertisseur à plusieurs niveaux (46, 76) est utilisé comme un accumulateur d'énergie central d'un système d'alimentation en énergie, le convertisseur à plusieurs niveaux (46, 76) étant réalisé pour fournir au moins une première tension alternative électrique et pour la moduler avec au moins une deuxième tension alternative électrique, dans lequel, de manière correspondante, au moins une tension alternative électrique qui en résulte est à fournir audit au moins un transformateur (60, 60a, 60b) et est à transformer de manière correspondante par ledit au moins un transformateur (60, 60a, 60b) en au moins une tension alternative électrique sortante et à fournir au deuxième sous-réseau (44, 44a, 74, 74a),
**caractérisé en ce que** le convertisseur à plusieurs niveaux (46, 76) est réalisé pour connecter en série et/ou en parallèle les uns aux autres au moins deux modules individuels de la pluralité de modules individuels (48a, 48b, 48c, 48d, 50a, 50b, 50c, 50d, 52a, 52b, 52c, 52d), et pour fournir ladite au moins une première tension alternative à partir d'une combinaison de tensions individuelles des au moins deux modules individuels (48a, 48b, 48c, 48d, 50a, 50b, 50c, 50d, 52a, 52b, 52c, 52d) à combiner entre eux, **en ce que** le convertisseur à plusieurs niveaux (46, 76) est associé à au moins un accumulateur d'énergie supplémentaire (56) qui est réalisé pour fournir ladite au moins une deuxième tension alternative, l'accumulateur d'énergie supplémentaire (56) étant disposé en dehors de la pluralité de modules individuels (48a, 48b, 48c, 48d, 50a, 50b, 50c, 50d, 52a, 52b, 52c, 52d).

12. Convertisseur à plusieurs niveaux selon la revendication 11 qui est associé à une unité de contrôle (54) qui est réalisée pour régler des valeurs d'au moins un paramètre physique de ladite au moins une première tension alternative et/ou de ladite au moins une deuxième tension alternative.

13. Convertisseur à plusieurs niveaux selon la revendication 11 ou 12 qui présente plusieurs branches (12, 16, 20, 47, 49, 51), chaque branche (12, 16, 20, 47, 49, 51) présentant une combinaison de plusieurs modules individuels (48a, 48b, 48c, 48d, 50a, 50b, 50c, 50d, 52a, 52b, 52c, 52d) interconnectés, chaque branche (12, 16, 20, 47, 49, 51) devant produire respectivement une première tension alternative.

14. Convertisseur à plusieurs niveaux selon la revendication 13 qui est réalisé pour fournir ladite au moins une première tension alternative électrique par une prise complète sur au moins une branche (47, 49, 51) de manière correspondante et/ou par une prise partielle sur au moins une branche (47, 49, 51) de manière correspondante par rapport à un point de référence (66) du convertisseur à plusieurs niveaux et pour la moduler avec ladite au moins une deuxième tension alternative électrique.

15. Convertisseur à plusieurs niveaux selon la revendication 13 ou 14 qui est réalisé pour fournir par les plusieurs branches (47, 49, 51) plusieurs premières tensions alternatives décalées en phase les unes par rapport aux autres, et pour les moduler respectivement avec ladite au moins une deuxième tension alternative en plusieurs tensions alternatives résultantes de manière correspondante.

16. Convertisseur à plusieurs niveaux selon la revendication 15 qui est réalisé pour moduler une tension alternative respective des plusieurs premières tensions alternatives entre une borne de phase respective du convertisseur à plusieurs niveaux pour un consommateur du premier sous-réseau et le point de référence (66) du convertisseur à niveaux multiples (10, 47, 76) avec ladite au moins une deuxième tension alternative.

17. Convertisseur à plusieurs niveaux selon la revendication 13 ou 16, dans lequel le point de référence (66) correspond à un point neutre du convertisseur à plusieurs niveaux (46, 76).

18. Convertisseur à plusieurs niveaux selon la revendication 15 à 17 qui est réalisé pour fournir une tension alternative résultante respective des plusieurs tensions alternatives résultantes à un transformateur (60, 60a, 60b) respectif de plusieurs transformateurs (60, 60a, 60b) de manière correspondante qui transforme la tension alternative résultante respective en une tension alternative sortante respective.

19. Convertisseur à plusieurs niveaux selon l'une quelconque des revendications 11 à 18, dans lequel les accumulateurs d'énergie des modules individuels (48a, 48b, 48c, 48d, 50a, 50b, 50c, 50d, 52a, 52b, 52c, 52d) sont réalisés sous la forme de sources de tension continue, le convertisseur à plusieurs niveaux (46, 76) présentant au moins un convertisseur qui est réalisé pour convertir une tension individuelle, réalisée sous forme d'une tension continue, d'un accumulateur d'énergie d'au moins un module individuel (48a, 48b, 48c, 48d, 50a, 50b, 50c, 50d, 52a, 52b, 52c, 52d) en une tension alternative et pour en fournir ladite au moins une première tension alternative.

20. Système d'alimentation en énergie présentant un réseau électrique (40, 70) qui comprend un premier sous-réseau (42, 72) et un deuxième sous-réseau (44, 44a, 74, 74a) qui sont interconnectés par l'intermédiaire d'au moins un transformateur (60, 60a, 60b) et sont séparés galvaniquement l'un de l'autre par celui-ci, dans lequel un côté primaire de l'au moins un transformateur (60, 60a, 60b) ayant un premier nombre d'enroulements est associé au premier sous-réseau (42, 72) et un côté secondaire de l'au moins un transformateur (60, 60a, 60b) ayant un deuxième nombre d'enroulements est associé au deuxième sous-réseau (44, 44a, 74, 74a), dans lequel le premier sous-réseau (42, 72) présente un convertisseur à plusieurs niveaux (46, 76) doté d'une pluralité de modules individuels (48a, 48b, 48c, 48d, 50a, 50b, 50c, 50d, 52a, 52b, 52c, 52d), chaque module individuel (48a, 48b, 48c, 48d, 50a, 50b, 50c, 50d, 52a, 52b, 52c, 52d) présentant un accumulateur d'énergie électrique, le convertisseur à plusieurs niveaux (46, 76) étant utilisé comme un accumulateur d'énergie central d'un système d'alimentation en énergie, le convertisseur à plusieurs niveaux (46, 76) étant réalisé pour fournir au moins une première tension alternative électrique et pour la moduler avec au moins une deuxième tension alternative électrique, dans lequel de manière correspondante au moins une tension alternative électrique qui en résulte est à fournir audit au moins un transformateur (60, 60a, 60b), ledit au moins un transformateur (60, 60a, 60b) étant réalisé pour transformer de manière correspondante au moins une tension alternative électrique résultante de manière correspondante en au moins une tension alternative électrique sortante et pour la fournir au deuxième sous-réseau (44, 44a, 74, 74a),
**caractérisé en ce que** le convertisseur à plusieurs niveaux (46, 76) est réalisé pour connecter en série et/ou en parallèle les uns aux autres au moins deux modules individuels de la pluralité de modules individuels (48a, 48b, 48c, 48d, 50a, 50b, 50c, 50d, 52a, 52b, 52c, 52d), et pour fournir ladite au moins une tension alternative à partir d'une combinaison de tensions individuelles des au moins deux modules individuels (48a, 48b, 48c, 48d, 50a, 50b, 50c, 50d, 52a, 52b, 52c, 52d) à combiner ensemble, dans lequel le convertisseur à plusieurs niveaux (46, 76) est associé au moins à un accumulateur d'énergie supplémentaire (56) qui est réalisé pour fournir ladite au moins une tension alternative, l'accumulateur d'énergie supplémentaire (56) étant disposé en dehors de la pluralité de modules individuels (48a, 48b, 48c, 48d, 50a, 50b, 50c, 50d, 52a, 52b, 52c, 52d).

21. Système d'alimentation en énergie selon la revendication 20, dans lequel le premier nombre d'enroulements côté primaire du transformateur (60, 60a, 60b) est supérieur au deuxième nombre d'enroulements du côté secondaire du transformateur (60, 60a, 60b).

22. Système d'alimentation en énergie selon la revendication 20 ou 21 à disposer dans un véhicule automobile, et dans lequel le premier sous-réseau (42, 72) est à associer à une machine électrique comme consommateur (58).

23. Système d'alimentation en énergie selon l'une quelconque des revendications 20 à 22, comprenant en outre au moins un redresseur (62, 62a, 62b) qui est réalisé pour transformer ladite au moins une tension alternative électrique sortante en au moins une tension continue de manière correspondante.

24. Système d'alimentation en énergie selon l'une quelconque des revendications 20 à 22 qui est réalisé pour fournir plusieurs premières tensions alternatives et pour moduler ces plusieurs premières tensions alternatives respectivement avec au moins une deuxième tension alternative en plusieurs tensions alternatives résultantes de manière correspondante, dans lequel le système d'alimentation en énergie comprend de manière correspondante plusieurs transformateurs (60, 60a, 60b), respectivement un transformateur (60, 60a, 60b) étant réalisé pour transformer respectivement l'une des plusieurs tensions alternatives résultantes en respectivement une tension alternative sortante, et dans lequel le système d'alimentation en énergie comprend en outre de manière correspondante plusieurs redresseurs (62, 62a, 62b) qui sont connectés en aval des plusieurs transformateurs (60, 60a, 60b), un redresseur (62, 62a, 62b) respectif étant réalisé pour transformer une tension alternative sortante respective d'un transformateur (60, 60a, 60b) respectif en une tension continue respective, les plusieurs redresseurs (62, 62a, 62b) étant interconnectés de telle sorte que les tensions continues respectives peuvent être transformées en une tension globale.
